# EUROPEAN PATENT SPECIFICATION

(11) **EP 1 437 875 B1**
(45) Date of publication and mention of the grant of the patent: **02.07.2008**
(21) Application number: 04000047.3
(22) Date of filing: 05.01.2004
(51) Int. Cl.: H04L 29/06, H04L 29/08, A63F 13/12

(54) **Personal information input system, information management server and personal information obtaining method**
System zur Eingabe von persönlichen Informationen, Informationsverwaltungseinrichtung und Verfahren zum Erhalten von persönlichen Informationen
Système d'entrée d'informations personnelles, serveur de gestion d'information et procédé pour obtenir des informations personnelles

(30) Priority: 10.01.2003 JP 2003005140
(43) Date of publication of application: 14.07.2004
(73) Proprietor: Aruze Corp., Tokyo 135-0063 (JP)
(72) Inventor: Kogo, Junichi, Aruze Corp., Tokyo 135-0063 (JP)
(74) Representative: HOFFMANN EITLE

(56) References cited:
- EP-A- 1 258 827
- US-A1- 2002 068 592
- US-A1- 2002 183 117
- US-B1- 6 227 974
- US-B1- 6 264 560

## Description

The present invention relates to a personal information input system, an information management server and a personal information obtaining method that are for utilization of data inputted at terminals.

Along with a progress in an Internet technology, services utilizing information communication over networks such as the Internet have been increasing in various fields. Specifically, such services include Internet shopping, information providing services and the like (for example, refer to Japanese Patent Laid-Open No. 2002-366794).

When using these services, users are obliged to register as members in many cases. This is because providers of the above services try to keep their customers as many as possible and not to allow the customers to be taken away by their competitors, or the providers intend to obtain information on the respective users, namely, their customers, through the networks.

In this member registration, each user is required to answer questions of a very large number of items in a form of a questionnaire so that the providers can provide information more suitable to needs of the respective members.

US patent application US2002183117 relates to a server device for net games which can increase the acquaintances of the user through net games, give sufficient excitement to the user, and can run net games smoothly by improving the enthusiasm of users to participate in these games. A lobby server stores profile information for each member when each member accesses using a client computer, and at the end of the encounter league, in which profile information is invariably exchanged, the lobby server enables the stored profile information of one member to be read at the client computer of the other member, and enables the stored profile information of the other member to be read at the client computer of the first member.

European patent application EP1258827 relates to a game method for enabling battle games through network such as internet, a server capable of executing the game method, and a storage medium storing a program capable of executing the game method. On a server, face image is registered and updated according to the player's skill-level. Specifically, as personal information, not only registration of user's address, name, or pen name, but also face information is registered and changed according to the game result. Therefore, this permits a quick visual recognition of the previous game result. As the result, when performing a battle game between terminals, the player can be understood the competitor's skill-level.

However, the user has to input his/her personal information for many items in such a member registration. Moreover, if one user makes a plurality of member registrations, the user has to input his/her personal information of similar content at each member registration. Therefore, there have been cases where the users think there is no need to make a registration if it is so troublesome.

The present invention has been made in view of the above-described problems. An object of the present invention is to provide a personal information input system which does not make respective users feel it troublesome to input his/her personal information, an information management server and a personal information obtaining method that enable collecting personal information required for member registration.

The present invention provides a personal information input system, an information management server and a personal information obtaining method that enable utilization of personal information at a device, which is other than a terminal connected via a communication line, by receiving the personal information inputted at the terminal by a player while playing a game.

According to the present invention there is provided a personal information input system according to appended independent claim 1, an information management server arranged to be capable of communicating with a plurality of game terminals, which allow a player to input personal information containing a plurality of items, and an external device according to appended independent claim 8, and a personal information obtaining method executed by a personal information input system including a plurality of game terminals, an information management server, an external device and a storing device connected to the external device, wherein the information management server is arranged to be capable of communicating with each of the plurality of game terminals and the external device is arranged to be capable of communicating with the information management server, according to appended independent claim 12. Preferred embodiments are defined in the appended dependent claims.

The present invention will be more fully understood from the detailed description given hereinbelow and the attached drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will be apparent to those skilled in the art from this detailed description.

For a better understanding of the invention and to show how the same may be carried into effect, reference will now be made, by way of example, to the accompanying drawings, in which:
Fig. 1 is a schematic view of a personal information input system according to an embodiment of the present invention;
Fig. 2 is a diagram showing a circuit configuration of a control circuit of an information management server;
Fig. 3 is a perspective view of a terminal;
Fig. 4 is a diagram showing a circuit configuration in which a main control circuit controlling the terminal and peripheral devices electrically connected thereto are included;
Fig. 5 is a diagram showing a circuit configuration in which an auxiliary controller controlling an image display device and the like in the terminal and peripheral devices electrically connected thereto are included;
Fig. 6 is a schematic view showing a concept of an image data arrangement in a video RAM of a auxiliary controller;
Fig. 7 is a view of an example of an image display in an image display device;
Fig. 8 is a view of an example of an image display in the image display device;
Fig. 9 is a view of an example of an image display in the image display device;
Fig. 10 is a view of an example of an image display in the image display device;
Fig. 11 is a view of an example of an image display in the image display device;
Fig. 12 is a view of an example of an image display in the image display device;
Fig. 13 is a view of an example of an image display in the image display device;
Fig. 14 is a view of an example of an image display in the image display device;
Fig. 15 is a view of an example of an image display in the image display device;
Fig. 16 is a chart showing a subroutine of a program executed on the terminal and the information management server;
Fig. 17 is a chart showing a subroutine of a program executed on the terminal and the information management server;
Fig. 18 is a chart showing a subroutine of a program executed on the information management server and an external device;
Fig. 19 is a chart showing a subroutine of a program executed on the information management server, the terminal and the external device;
Fig. 20 is a flowchart of a process concerning selecting image information;
Fig. 21 is a flowchart of a process concerning selecting personal information input image information;
Fig. 22 is a view showing an example of a format of storing personal information; and
Fig. 23 is a view showing an example of a table stored in a RAM.

According to a first arrangement, there is provided a personal information input system comprising: a plurality of game terminals; and an information management server connected to be capable of communicating with each of the plurality of game terminals. Each of the game terminal comprises: (a) image display means for displaying an image; (b) control means for executing a game program; (c) first storing means for storing a plurality of pieces of personal information input image information for allowing a player to input personal information about the player containing a plurality of items at a plurality of timings as data for constituting a game image displayed on the image display means, the game being executed based on the game program, and character information concerning a character image for constituting the game image; (d) drawing means for constituting the game image by appropriately combining a plurality of data containing the personal information input image information and the character information; and (e) first transmitting means for transmitting the personal information inputted in response to the plurality of pieces of personal information input image information displayed on the image display means to the server. The information management server comprises: (f) receiving means for receiving the personal information transmitted from the game terminal; (g) second storing means for storing the personal information received by the receiving means; (h) ID code setting means for setting an ID code corresponding to the personal information stored in the second storing means; and (i) second transmitting means for transmitting the ID code set by the ID code setting means to the game terminal.

According to a second arrangement, there is provided an information management server connected to be capable of communicating with a plurality of game terminals, which includes: (a) receiving means for receiving personal information containing a plurality of items which are inputted in response to a plurality of pieces of personal information input image information for requesting a player to input the plurality of items at a plurality of timings as data for constituting an game image executed based on a game program at the game terminal; (b) storing means for storing the personal information received by the receiving means; (c) ID code setting means for setting an ID code corresponding to the personal information stored in the storing means; and (d) second transmitting means for transmitting the ID code set by the ID code setting means to the game terminal.

According to a third arrangement, there is provided a personal information obtaining method executed by a plurality of game terminals and an information management server connected to be capable of communicating with each of the plurality of game terminals. The method comprises the steps of: (a) displaying a game image in the game terminal; (b) storing a plurality of pieces of personal information input image information for causing a player to input personal information about the player containing a plurality of items at a plurality of timings as data for constituting the game image, the game being executed based on a game program, and character information on a character image for constituting the game image in the game terminal; (c) constituting the game image by combining a plurality of data containing the personal information input image information and the character information in the game terminal; (d) transmitting the personal information inputted in response to the plurality of pieces of personal information input image information to the information management server from the game terminal; (e) receiving the personal information transmitted from the game terminal in the information management server; (f) storing the personal information in the information management server; (g) setting an ID code corresponding to the personal information in the information management server; and (h) transmitting the ID code to the game terminal from the information management server.

According to these arrangements, the player is prompted to input his/her personal information containing the plurality of items at the plurality of timings while the player is playing a game at the game terminal. Since the input of the personal information is completed while the player is enjoying the game, the player does not find it troublesome to input his/her personal information. The personal information is transmitted to the information management server by the game terminal, and the ID code is set to the personal information at the information management server. This ID code can be utilized at the external device. Therefore, using this ID code can omit, for example, necessity of the member registrations, that is, necessity of inputting the personal information to receive services on Internet sites.

Additionally, in the arrangements, each of the game terminals can further comprises third storing means for storing a plurality of pieces of complete information to identify that an input by the player has been completed for the plurality of items contained in the personal information. The control means causes the third storing means to store the pieces of complete information for the items for which the input by the player has been completed. Additionally, the control means outputs an instruction, to the drawing means, to combine the personal information input image information corresponding to the items, among the plurality of items, for which the input by the player has not been completed with the character information based on the plurality of pieces of complete information.

According to the arrangements, by using the complete information, only the personal information input image information corresponding to the item for which the input has not been completed is incorporated on the game screen. Thus, the personal information input image information concerning the item for which the input has been completed is not displayed on the game screen again.

In the arrangements, the first storing means stores a plurality of pieces of character information concerning a plurality of character images, and stores the plurality of pieces of personal information input image information corresponding to the plurality of items in relation to each of the plurality of pieces of character information. The control means outputs an instruction to the drawing means in order to cause the drawing means to select the personal information input image information to be combined with the character image to be included in the game image from among the plurality of pieces of personal information input image information related to the character information on the character images.

According to the arrangements, the personal information input image information is selected in accordance with the character image to be included in the game image. The personal information input image information can be provided as appropriate in accordance with the character image to be combined therewith. Thus, appropriate personal information input image information is combined with the game image in accordance with a scene of the game.

In the arrangements, the control means of the game terminal can causes the drawing means to create the image of the game without using the personal information input image information in accordance with the game program when information that no benefit is desired to be provided through use of the personal information at a device to which the second transmitting means can transmit the ID code is contained in one of the items of the personal information.

According to the arrangements, in the course of obtaining the personal information on the player, obtaining of the personal information can be ended as soon as it is known that the player is not going to receive the service where his/her personal information is used. Accordingly, input work by the player is reduced thereafter for proceeding the game, thereby facilitating speed-up for the game to proceed.

In the arrangements, the first transmitting means can transmit the personal information after the input is completed for all of the plurality of items. Moreover, the receiving means of the information management server can receive the personal information stored in the game terminal after all of the plurality of items are inputted in response to the plurality of pieces of personal information input image information.

According to these arrangements, there is no transmission of the personal information from the game terminal to the information management server during the game. Hence, the game proceeds without influence on the game terminal in an environment of a slow communication speed.

In the arrangements, the second storing means (storing means of the information management server) can store the personal information only when permission information, which indicates that permission for providing the personal information to a third party has been received from the player, is received from the game terminal. The information management server saves the personal information after confirming that the personal information stored during the game is allowed to be provided to the third party. Therefore, consideration can be made for the players who do not want their personal information to be provided.

According to the arrangements, the second storing means (storing means of the information management server) can store the personal information only when whether the personal information is correct information or not is confirmed through the image display means of the game terminal and confirmation information indicating that the player has made confirmation is received from the game terminal. Thus, whether content of the personal information is correct or not can be confirmed upon saving the personal information. Therefore, storage of wrong personal information can be avoided.

An embodiment of the present invention is described hereinbelow with reference to the drawings. Note that a game terminal of this embodiment is configured to be able to also serve mainly as an in-store terminal. The game terminal of this invention is not limited thereto, and may be any of an in-store terminal, an in-store video game machine, a home video game machine, a personal computer, a PDA, a cellular telephone and the like, as long as the terminal is capable of two-way communication by being connected to an information management server through a communication line, and is provided with an input device and an output device.

[Configuration of Entire System including Information Management Server As a Central Function]

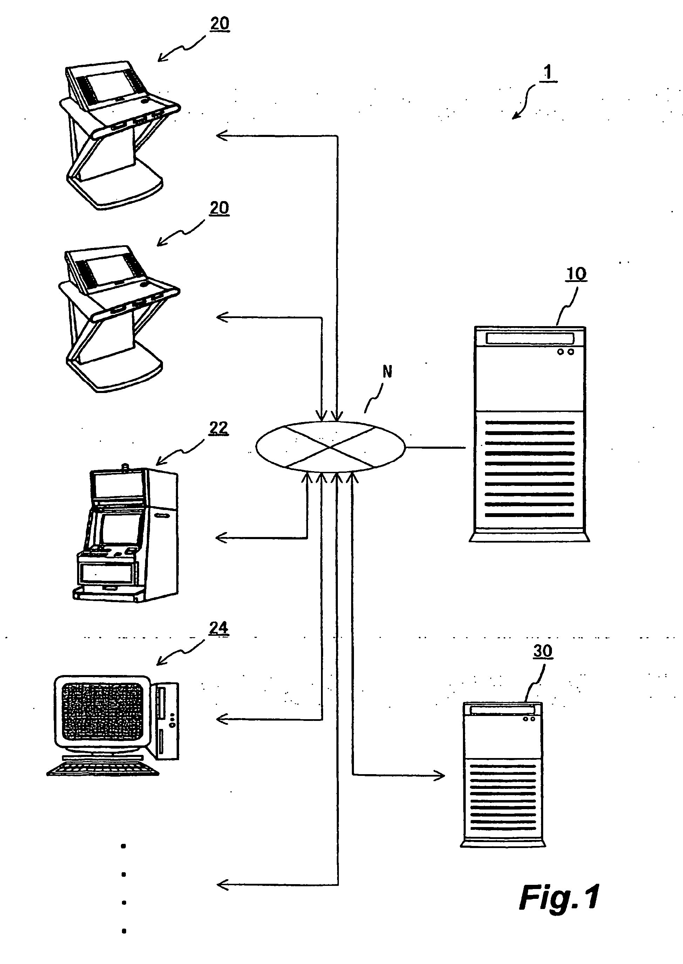

Fig. 1 is a schematic view of a personal information input system 1 according to this embodiment. The personal information input system 1 includes an information management server 10, a plurality of terminals 20, 22 and 24, each serving as a game terminal, and an external device 30 provided in addition to the terminals 20, 22 and 24. The information management server 10, the plurality of terminals 20, 22 and 24, and the external device 30 are connected to one another through communication lines.

The terminal 20 is the game terminal installed in a game arcade or the like, and can be also used as an in-store terminal which is installed in a shop such as a convenience store which users can easily drop into. The terminal 22 is a general game machine installed in a place of amusement. The terminal 24 is a personal computer. Apart from the above terminals, a cellular phone, a PDA, a home video game machine and the like can be used as the game terminal of the present invention. The terminal 20 and the like are configured to be able to transmit/receive various kinds of information to/from the information management server 10.

The terminal 20 is explained as an example hereinbelow, but the terminals 22 and 24 are also enabled to realize the similar function to that of the terminal 20 described below. Note that the function of the game terminal of the present invention may be realized by any other terminal.

The information management server 10 is also connected to the external device 30 through a network of communication lines. The external device 30 uses information accumulated in the information management server 10.

The information management server 10 manages information inputted in the plurality of terminals 20. Each terminals 20 is provided with its own identification number. According to the identification number, the information management server 10 determines the terminal 20 from which data is transmitted.

[Configuration of Information Management Server]

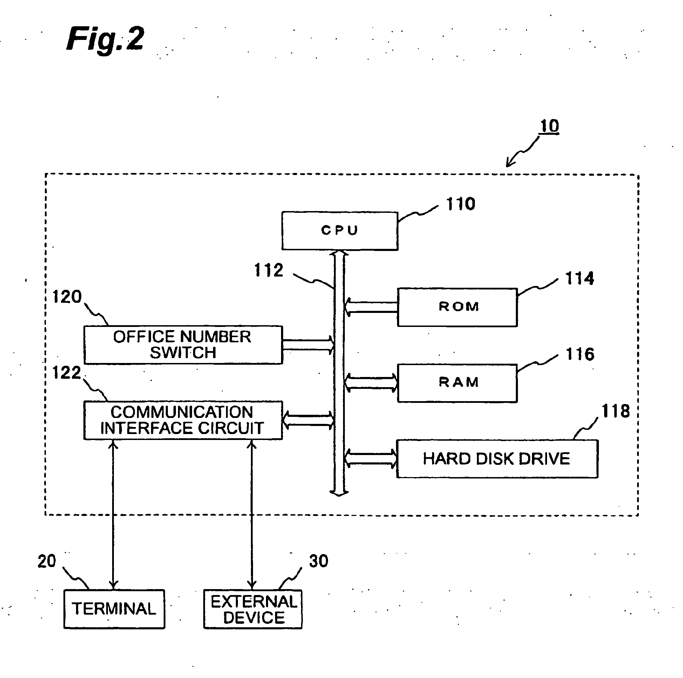

Fig. 2 is a diagram showing a configuration of a control circuit of the information management server.

The information management server 10 has a central processing unit (hereinafter, referred to as a CPU) 110. The CPU 110 is connected to an I/O bus 112. The control circuit is configured so that a data signal or an address signal is fed into/from the CPU 110. A read only memory (ROM) 114 and a random access memory (RAM) 116 are also connected to the I/O bus 112. In the ROM 114, a control program is stored which controls the later-described information management server 10. The RAM 116 stores therein flags, values of variables and the like that are used in the above-mentioned program.

A hard disk drive 118 is also connected to the I/O bus 112. In the hard disk drive 118, a database is constructed. In this database, personal information containing plurality of items inputted by players through the terminals 20, ID codes corresponding to the personal information and the like are accumulated. By using the ID code received from the information management server 10, the external device 30 can search the database and retrieve the personal information corresponding to the ID code from the information management server 10.

Note that a storage device for storing a game program and the like may be any devices as long as it is a nonvolatile rewritable storage device with a large capacity, such as a flash memory.

An office number switch 120 and a communication interface circuit 122 are also connected to the I/O bus 122. As shown in Fig. 1, the communication interface circuit 112 is communicably connected to the plurality of terminals 20 and the external device 30 through communication lines such as public switched telephone network, local area network (LAN) or the like. The office number switch 120 sets office numbers in these communications.

Note that, in this embodiment, both the plurality of terminals 20 and the external device 30 are connected to the information management server 10 through the communication interface circuit 122. However, the present invention is not limited thereto. The plurality of terminals 20 and the external device 30 can be connected to the information management server 10 through different communication interface circuits, respectively. For example, the plurality of terminals 20 may be connected to the information management server 10 through dedicated lines, and the external device 30 may be connected to the same through a public line.

[Configuration of Terminal]

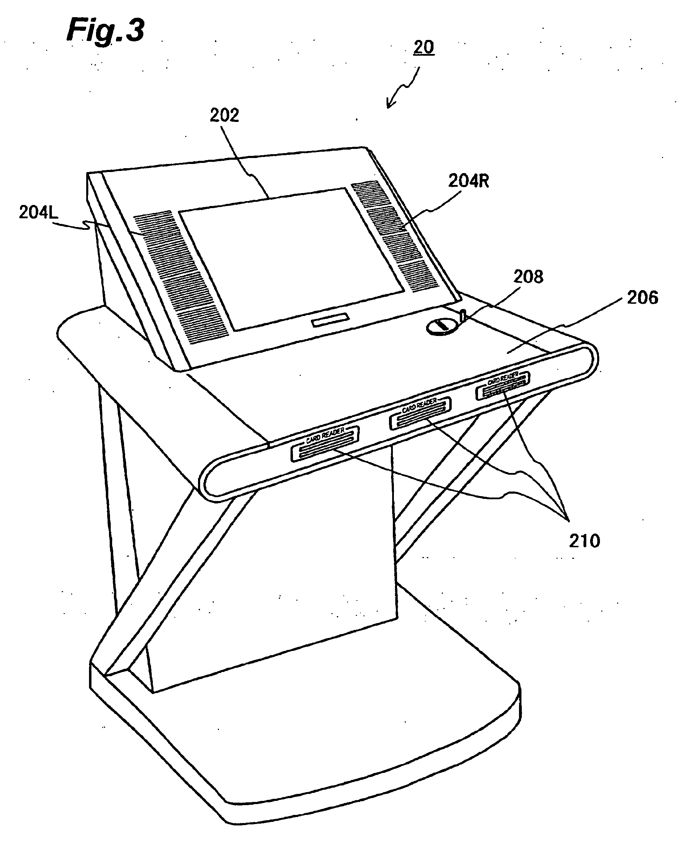

Fig. 3 is a perspective view of the terminal 20. The upper portion of the terminal 20 inclines rearward with respect to a perpendicular direction based on a state shown in Fig. 3. At the center of a plane face inclined as mentioned above, an image display device 202 is provided. The image display device 202 can display various kinds of information such as game information in a game. The game proceeds on the display.

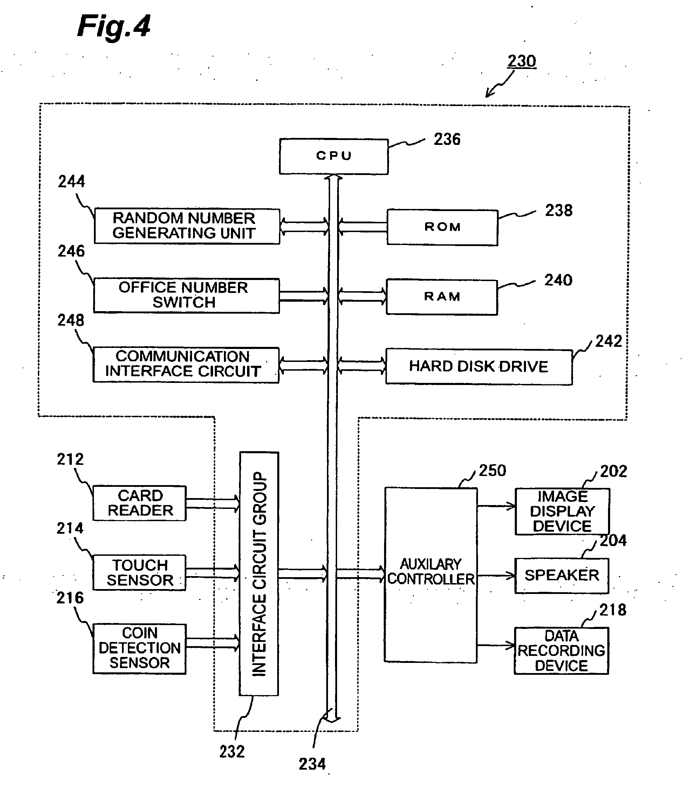

In the image display device 202, a touch sensor 214 (see Fig. 4) is provided. Operations on the image display device 202 during the game and input of various kinds of data are carried out through the touch sensor 214.

On the left and right sides of the image display device 202, speakers 204 (204L and 204R) are provided. The speakers 204 (204L and 204R) produce sounds corresponding to images displayed on the image display device 202 and notification sounds for a user of the terminal.

Underneath the image display device 202, a pedestal 206 is provided. The pedestal 206 protrudes frontward of the terminal 20 and has a horizontal plane. On the right side on the top surface of the pedestal 206, a coin drop slot 208 is provided. The user of the terminal drops a coin, a token or the like into the coin slot 208 so that a pay service is available at the terminal 20.

On the front face of the pedestal 206, a card insertion slots 210 are provided, into which an information card storing various kinds of information is inserted by the user of the terminal. A card reader 212 (see Fig. 4) and a data recording device 218 (see Fig. 4) read the various kinds of information into the terminal 20 from the information card inserted from the card insertion slot 210, or write data into the information card.

[Configuration of Control Device of Terminal]

Fig. 4 is a diagram showing a circuit configuration including a main control circuit which controls the terminal 20 and peripheral devices electrically connected to the main control circuit.

The card reader 212 provided at the back of the card insertion slot 210 and the touch sensor 214 provided in the image display device 202 are connected to an interface circuit group 232 of the main control circuit 230. The interface circuit group 232 is connected to an I/O bus 234. When the information card is inserted or the touch sensor 214 is touched, the card reader 212 or the touch sensor 214 generates a predetermined signal. The generated signal is supplied to the I/O bus 234. The I/O bus 234 is configured so that a data signal or an address signal is fed into/from a CPU 236.

Note that the terminal 20 of this embodiment is provided with, but not limited to, the touch sensor 214 for the player to input various kinds of information. The terminal 20 may be provided with an operation unit such as a keyboard or a command switch. In other words, any kind of terminal 20 is applied as long as it is provided with an input device which can generate an input signal that reflects the player's intention.

A coin detection sensor 216 is also connected to the interface circuit group 232. When coins are dropped into the foregoing coin drop slot 208, the coin detection sensor 216 produces a signal related to a number of coins dropped thereinto and the supplies the signal to the interface circuit group 232.

A ROM 238 and a RAM 240 are also connected to the I/O bus 234. The ROM 238 stores a control program, which controls a flow of the entire system of the terminal 20, and the like. The RAM 240 temporarily stores flags and values of variables used in a program such as the above-mentioned program, which is executed in the terminal 20.

A hard disk drive 242 is also connected to the I/O bus 234. The hard disk drive 242 stores a program which is not stored in the RAM 240 and is received through the information management server or the like in order to be executed in the terminal 20, data to be accumulated in the terminal 20 over a long period of time, and the like.

Note that the storage device for storing the game program and the like may be any devices as long as it is a nonvolatile rewritable storage device with a large capacity, such as a flash memory.

A random number generating unit 244 is connected to the I/O bus 234. The random number generating unit 244 is for generating random numbers used in the program executed in the terminal 20. When an instruction for generating random numbers is sent from the CPU 236 to the random number generating unit 244, the random number generating unit 244 generates random numbers in a predetermined range, and transmits a signal which indicates the value of the random numbers to the I/O bus 234. The CPU 236 determines a progress of the program based on the transmitted random numbers. The random numbers transmitted from the random number generating unit 244 is stored in the RAM 240 as data indicating the result of drawing.

An office number switch 246 is also connected to the aforementioned interface circuit group 232. As shown in Fig. 1, the office number switch 246 is communicatively connected to the information management server 10 through communication lines such as the public switched telephone network, LAN or the like and sets the office number in the communication therebetween. Thus, the plurality of terminals 20 are respectively identified by the information management server 10.

A communication interface circuit 248 is also connected to the I/O bus 234. The communication interface circuit 248 is for communicating with the information management server through communication lines such as the public switched telephone network, LAN or the like.

A auxiliary controller 250 is also connected to the I/O bus 234. Based on an instruction transmitted from the main control circuit 230, the auxiliary controller 250 produces driving signals for driving the image display device 202, the speakers 204 and the data recording device 218 which are connected to the auxiliary controller 250.

[Configuration of Auxiliary Controller of Terminal]

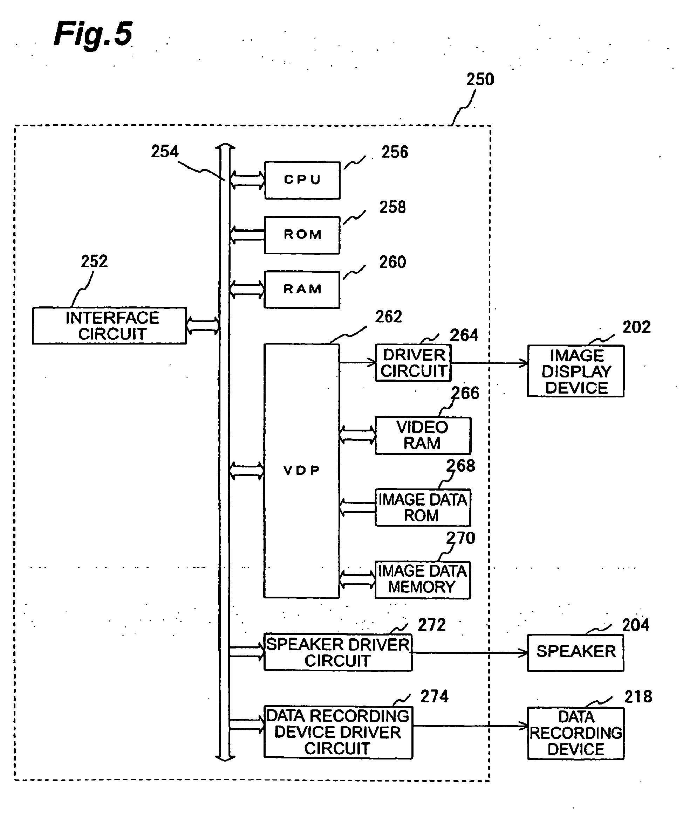

Fig. 5 is a diagram showing a circuit configuration in which an auxiliary controller controlling an image display device and the like in the terminal and peripheral devices electrically connected thereto are included.

An interface circuit 252 is connected to an I/O bus 254. An instruction transmitted from the main control circuit 230 is supplied to the I/O bus 254 through the interface circuit 252. The I/O bus 254 is configured so that a data signal or an address signal is fed into/from a CPU 256.

A ROM 258 and a RAM 260 are also connected to the I/O bus 254. The ROM 258 stores an output information control program for generating the driving signals supplied to the image display device 202, the speakers 204, and the data recording device 218 based on the instruction transmitted from the main control circuit 230. The RAM 260 stores flags and values of variables used in the program.

A video data processor (hereinafter, referred to as a VDP) 262 is also connected to the I/O bus 254. The VDP 262 includes circuits such as a so-called sprite circuit, a screen circuit, a pallet circuit and the like. The VDP 262 is a processor which can perform various processing for displaying images on the image display device 202.

A driver circuit 264 which generates a driving signal for driving the image display device 202 is connected to the VDP 262. A video RAM 266, an image data ROM 268 and an image data memory 270 are connected to the VDP 262. The video RAM 266 stores image data corresponding to image display instructions transmitted from the main control circuit 230. The image data ROM 268 stores image data including background image data, pattern image data, character image data and the like. The image data memory 270 stores newly added image data.

The CPU 256 reads out and then executes a display control program stored in the ROM 258. Based on the image display instructions transmitted from the main control circuit 230, the CPU 256 causes the video RAM 266 to store image data to be displayed on the image display device 202. The image display instructions transmitted from the main control circuit 230 include instructions for displaying a background, a pattern, a character and the like.

The image data ROM 268 and the image data memory 270 store personal information input image information and image data such as the character image data of a character such as a moving object and the like displayed as a presentation image and background image data configuring a background of the image display device 202 or the like. The character image data mentioned above includes image data required for displaying a character which performs a series of actions.

A speaker driver circuit 272 is also connected to the I/O bus 254. Upon receipt of a driving instruction from the CPU 256, the speaker driver circuit 272 transmits a sound signal to the speakers 204. Thus, the speakers 204 produce predetermined sounds.

A data recording device driver circuit 274 is also connected to the I/O bus 254. Upon receipt of a driving instruction from the CPU 256, the data recording device driver circuit 274 transmits a signal to the data recording device 218. Thus, the data recording device 218 records data into the information card inserted into the card insertion slot 210. The data includes magnetic data, character data to be written on the surface of the card, image data and the like.

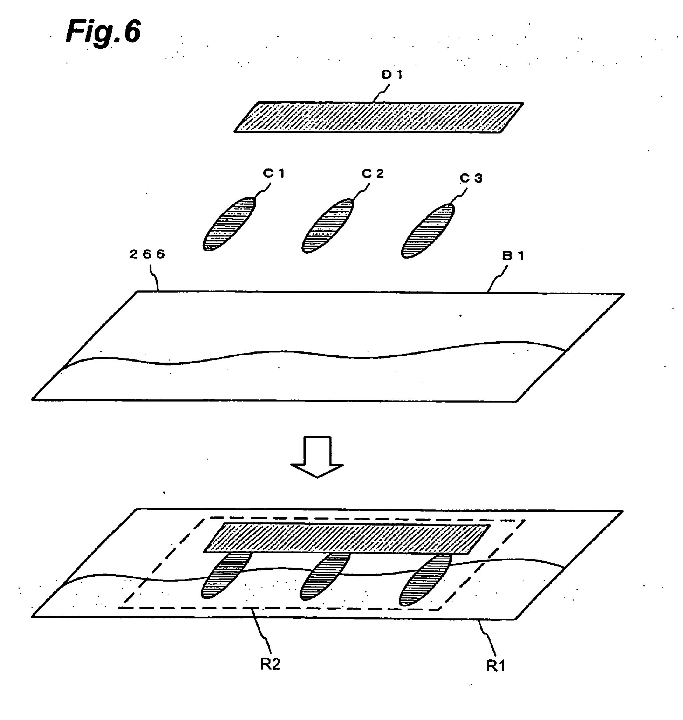

Fig. 6 is a schematic view showing a concept of an image data arrangement in the video RAM of the auxiliary controller. As shown in Fig. 6, a size of image data generated in the video RAM 266 in accordance with a screen display instruction (hereinafter, referred to as a screen image region R1) is set to be larger than a display region R2 displayed on the image display device 202. In Fig. 6, the screen image region R1 is surrounded by a solid line and the display region R2 is surrounded by a broken line. By setting these regions as above, smooth scrolling display of an image to be displayed on the image display device 202 can be realized.

When the instruction for displaying the personal information input image is transmitted from the main control circuit 230, the VDP 262 reads out image data of an image D1 showing the personal information input image from the image data ROM 268 or the image data memory 270: The VDP 262 arranges the read image data at a position in the video RAM 266, which corresponds to a position where the image should be displayed in the image display device 202.

When an instruction for displaying the characters is transmitted from the main control circuit 230, the VDP 262 reads out image data of each of character images C1 to C3 from the image data ROM 268. The VDP 262 arranges the read image data at positions in the video RAM 266, which correspond to positions where the character images should be displayed in the image display device 202.

When an instruction for displaying the background is transmitted from the main control circuit 230, the VDP 262 reads out image data of a background image B1 from the image data ROM 268. The VDP 262 arranges the read image data at a position in the video RAM 266, which corresponds to a position where the background image should be displayed in the image display device 202.

After generating the image data in the video RAM 266, the VDP 262 reads out only the image data which is stored in the display region R2 from the video RAM 266, and supplies the read image data to the driver circuit 264 as display signals. The image is displayed by each frame and a position where the image is displayed is changed, thereby adding movements to the characters and the like.

[Example Images Displayed on Terminal]

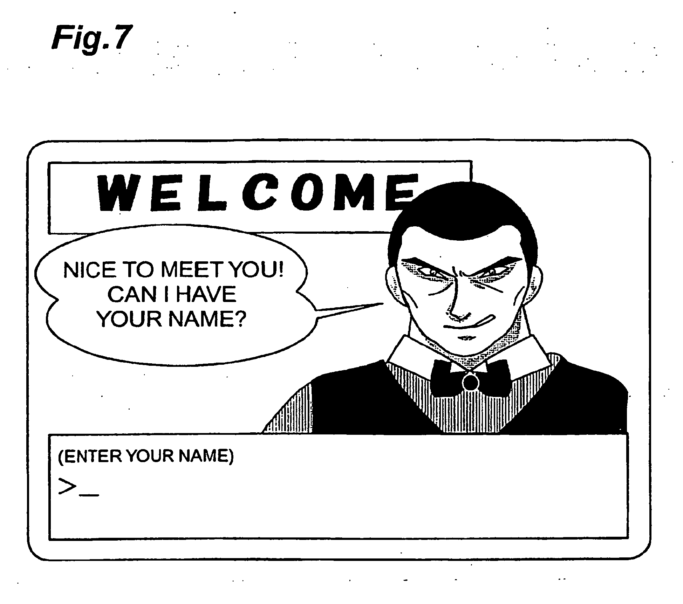

Figs. 7 to 15 show image display examples in the image display device of the terminal 20.

Fig. 7 is an example of an image display of showing a situation in which a character is asking the player to give his/her name and requesting the player to input the name while playing a game. In Fig. 7, the character displayed on the image display device 202 is asking a question, saying "Nice to meet you! Can I have your name?" An input screen where the player inputs his/her name is displayed at the bottom of the screen. The player inputs his/her name, following the given instruction.

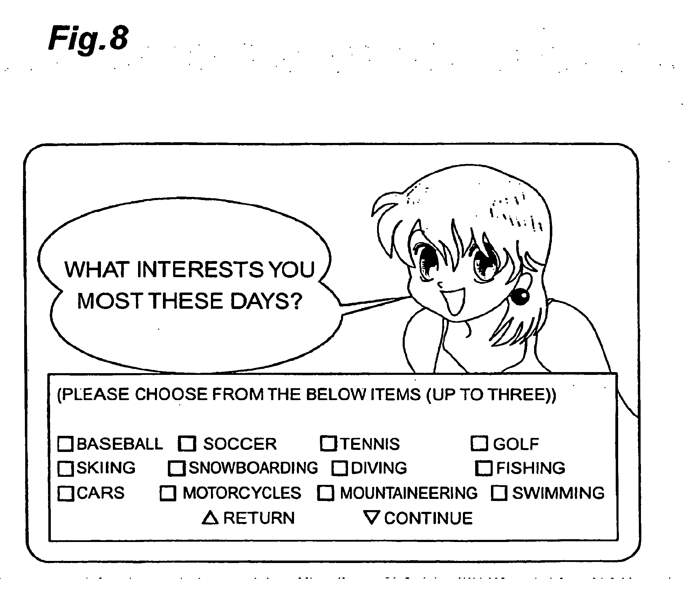

Fig. 8 is an example of an image display showing a situation in which a character is asking a question about the player's hobby and requesting the player to input answers to the question while the player is playing the game. In Fig. 8, the character displayed on the image display device 202 is asking a question, saying "What interests you most these days?" Several choices are displayed at the bottom of the screen, and, at the same time, a sentence "Please choose from the below items (up to three)" is displayed so that the player understands that he/she is requested to choose three items amongst the choices. The player chooses his/her hobbies, following the given instruction.

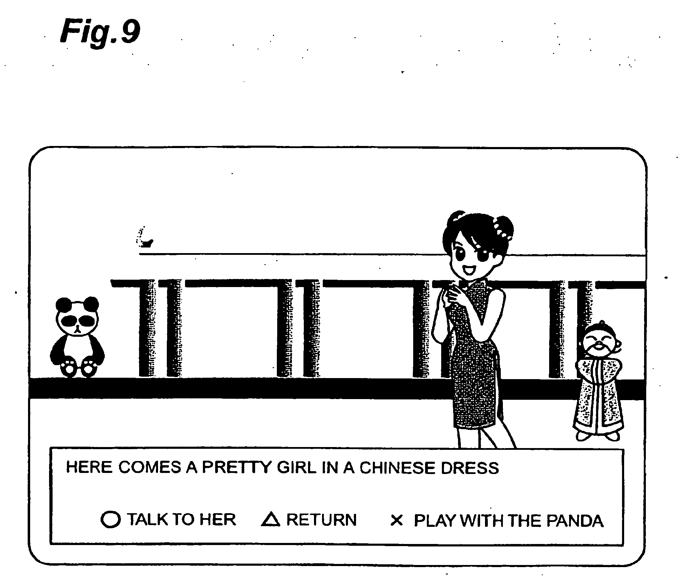

Fig. 9 is an example of an image display in which, during the game, the player is requested to choose an action for a character controlled by the player from choices of actions displayed therein. In Fig. 9, on the image display device 202, a girl in a Chinese dress is seen in front through a sight of the character. A panda and a Chinese man are seen at the back of the girl. There are three choices with a sentence in character, "Here comes a pretty girl in a Chinese dress" at a lower portion of the image display device 2.02. The player chooses one of the choices among the three as a next processing with reference to the information in character. Note that this example shows an image displayed in a terminal in which any one of three command switches labeled as circle, triangle, and cross is pushed for performing input processing. The player chooses any one of the three action patterns, each being described after each symbol designating each of the command switches. Thereafter, the player pushes the command switch designated by the one of the above symbols, which corresponds to the chosen action pattern. Thus, the input is completed.

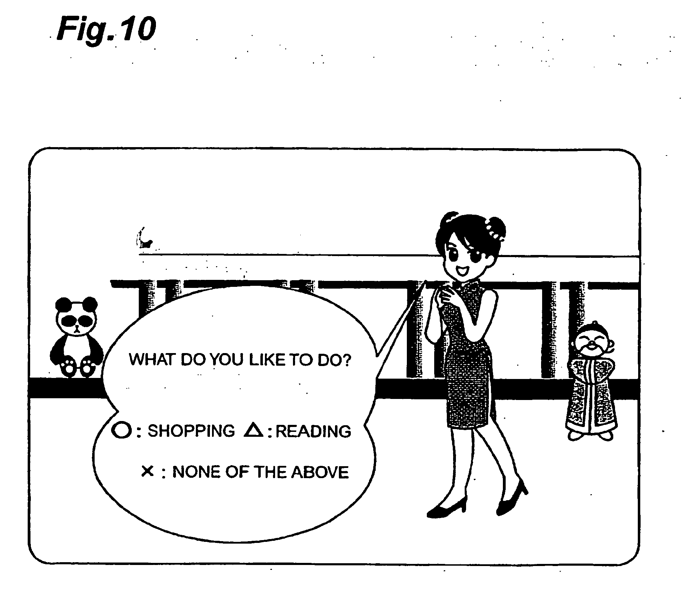

Fig. 10 is an example of an image display which appears in a process of conversation after "talk to her" designated by circle is chosen from three choices in the aforementioned drawing Fig. 9. In Fig. 10, the girl is asking a question, saying "What do you like to do?" and a plurality of choices is displayed. The player then chooses any one of these choices, and the chosen one is accumulated as an item of the personal information of the player.

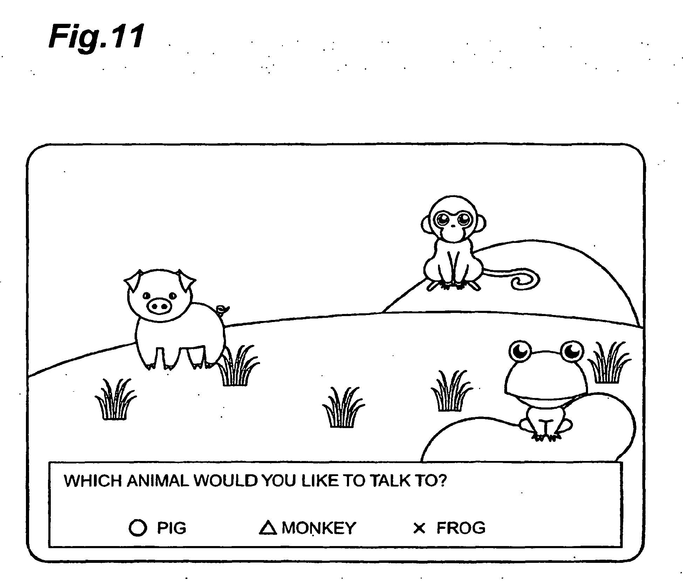

Similarly to Fig. 9, Fig. 11 shows an example of an image display in which, during the game, the player is requested to choose an action of the character controlled by the player, from the choices displayed therein. In Fig. 11, three animals that are a pig, a monkey and a frog are seen through a sight of the character on the image display device 202. There are three choices displayed at the lower portion of the image display device 202 together with information in character, "Which animal would you like to talk to?" The player chooses one out of three choices as the next processing, with reference to the information in characters. Note that this example shows an image displayed in a terminal in which any one of three command switches labeled as circle, triangle, and cross is pushed for performing input processing. The player chooses any one of the three action patterns, each being described after each symbol designating each of the command switches. Thereafter, the player pushes the command switch designated by the one of the above symbols, which corresponds to the chosen action pattern. Thus, the input is completed.

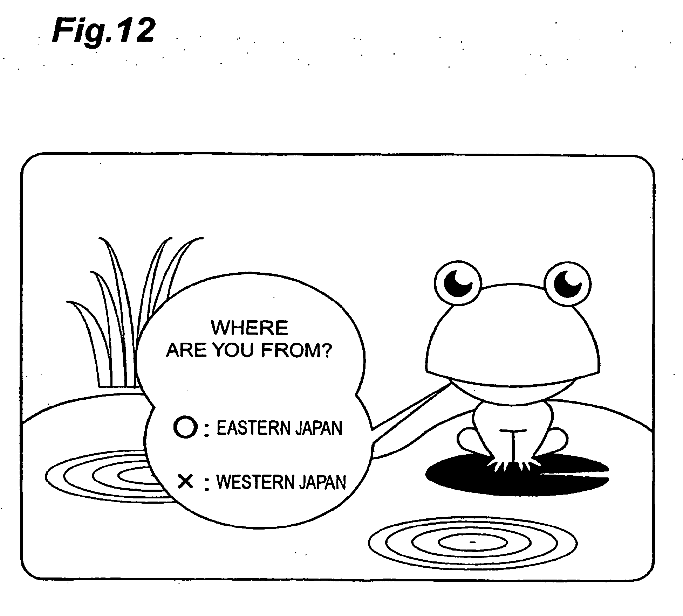

Fig. 12 is an example of an image display which appears in a process of conversation after "frog" designated by cross is chosen from the three choices in the aforementioned drawing Fig. 11. In Fig. 12, the frog is asking a question, saying "Where are you from?" and a plurality of choices is displayed. The player then chooses any one of these choices, and the chosen one is accumulated as an item of the personal information of the player. In Fig. 12, there are two choices of "Eastern Japan" and "Western Japan." Once the player chooses any one of these choices, choices of places in a narrower area may be further displayed so that detailed address of the player is inputted ultimately.

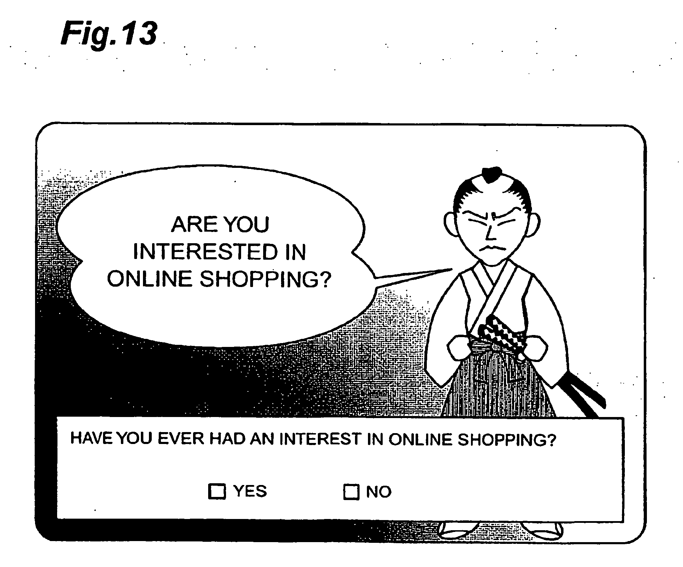

Furthermore, Fig. 13 is an example of an image display showing a situation in which, during the game, a character is asking the player whether he/she is interested in a service for which the accumulated personal data is used. In Fig. 13, the character displayed in the image display device 202 is asking a question, saying "Are you interested in online shopping?" An image is displayed at the lower portion of the image display device 202 for the player to choose whether or not he/she is interested in the service. Here, the player can choose "Yes" or "No." When the player chooses "Yes," there is a possibility that the player may resister for membership. Therefore, the collection of personal information is continued during the game. On the other hand, when the player chooses "No," there is no possibility that the player will resister for the membership. Thus, personal information is no longer collected and a different question may be asked.

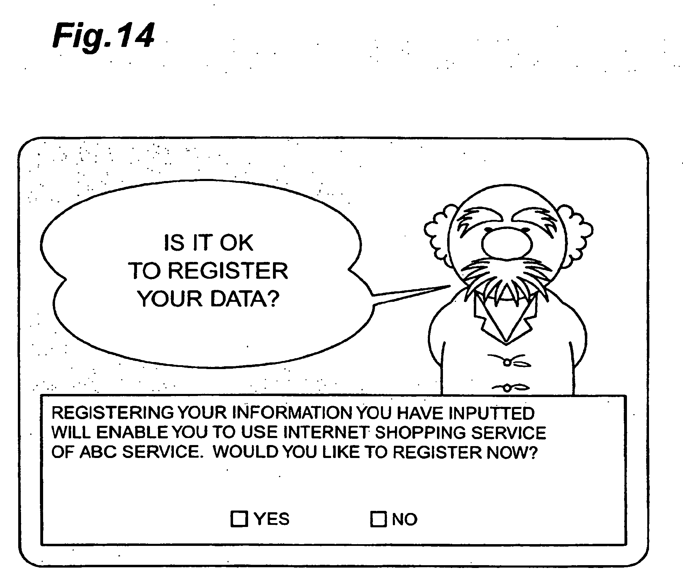

Fig. 14 is an example of an image display after collection of all items of the personal information is completed, in which a character is asking the player whether he/she permits registration of the personal information for the service where the accumulated personal data is used. In Fig. 14, the character displayed on the image display device 202 is asking a question, saying "Is it OK to register your data?" An image is displayed at the lower portion of the image display device 202, showing the name of the service for which the personal information is registered and choices for the player to choose whether he/she registers for the membership of the service. Here, the player can choose "Yes" or "No." When the player chooses "Yes," the personal information is sent to the service for membership registration of the service. On the other hand, when the player chooses "No," registration for the membership of the service is no longer needed. Thus, the personal information is not sent to the service.

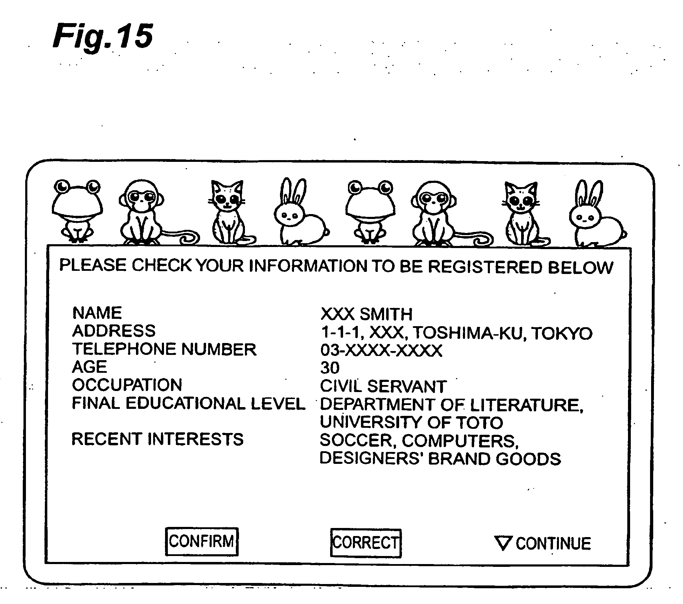

Fig. 15 is an example of an image display after collection of all items of the personal information is completed, requesting the player to confirm whether the inputted personal information is correct. In Fig. 15, the image display device 202 displays each item of the personal information inputted during the game as well as an image requesting the player to confirm whether each of the items of the personal information is correct. The player judges that each of the items displayed on the screen is correct and chooses "confirm," and thus the personal information is registered. On the other hand, when a part of the items is incorrect, the player chooses "correct," and thus the incorrect item is corrected before the personal information is registered.

[Processing in Server and Terminal]

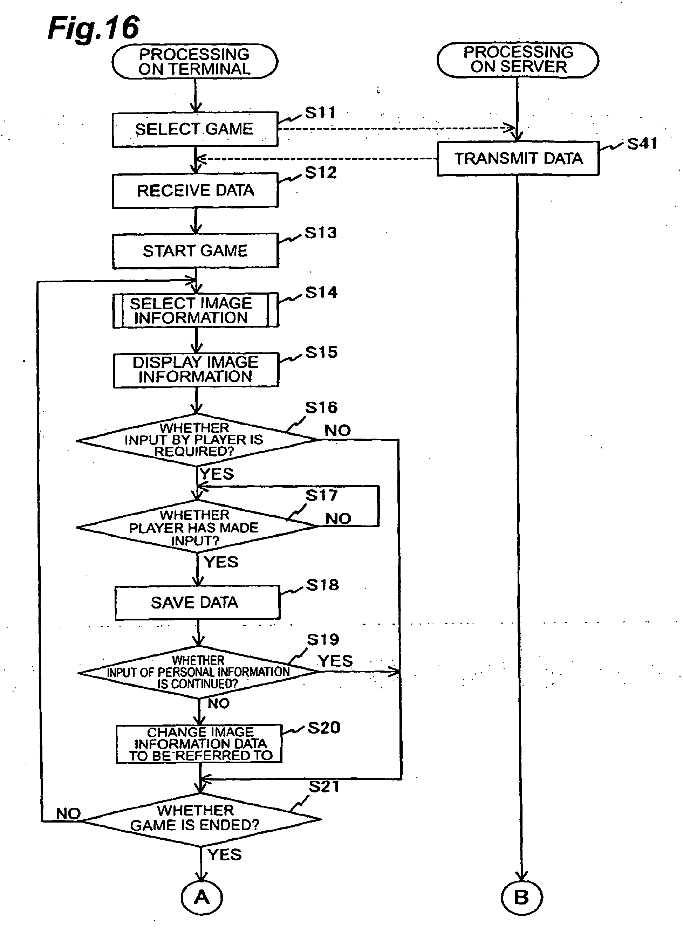

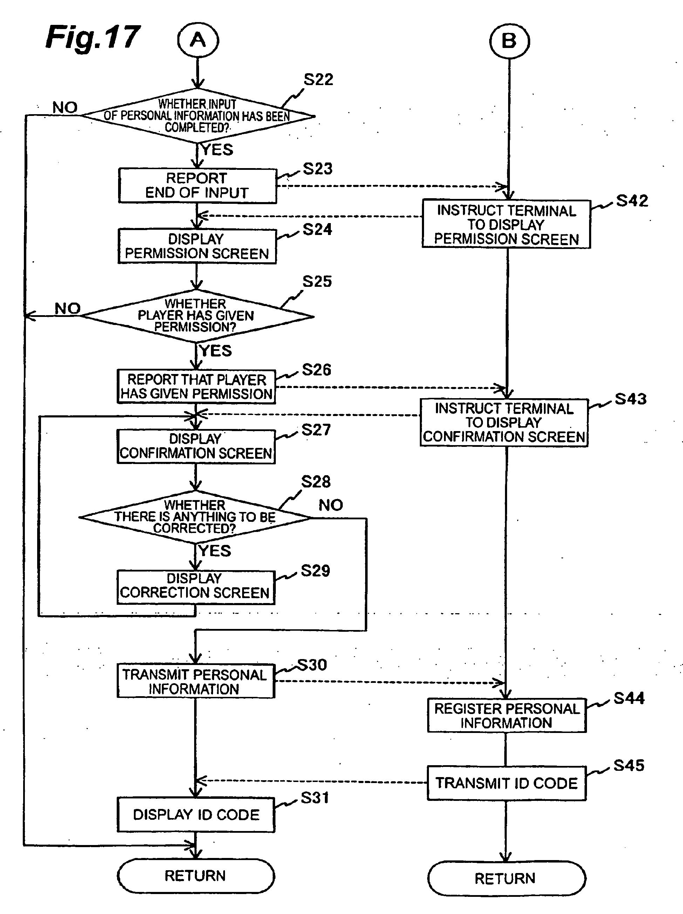

Description is given regarding a subroutine of a program executed in the terminal 20 and the information management server 10 in order to display images as described above for collecting the personal information. Figs. 16 and 17 are charts showing a subroutine of the program executed in the terminal 20 and the information management server 10. Note that execution of this subroutine is started when the player enters input for starting a game in the terminal 20 and continues until the game is ended.

[Processing in Terminal]

First of all, in the terminal 20, a game is selected in a processing of step S11. In this processing, the CPU 236 causes the image display device 202 to display a game selection screen. The CPU 236 receives a signal which is generated when the player touches the touch sensor 214 corresponding to the game selection screen. Based on the signal, the CPU 236 identifies a type of the game selected by the player. The CPU 236 then generates a signal for requesting the information management server 10 for a program necessary for proceeding the game and image information necessary for requesting the player to input the personal information. This signal is transmitted to the information management server 10.

Note that the game program may be stored in the terminal 20 in advance. However, since the terminal 20 is connected to the information management server, it is possible that a different game program is downloaded into the terminal 20 as necessary and executed therein. Further, the image information necessary for requesting the player to input the personal information may be prepared in advance together with the game program. However, in a case where a service supplier who hopes to acquire additional personal information is requesting for an additional item of personal information, it is possible to set image information for asking a question regarding the additional item.

After the above processing is completed, the flow shifts to step S12.

Note that, when the program necessary for proceeding the game, image information necessary for requesting the player to input the personal information and the like are all prepared in the terminal 20, it is not necessary to send the foregoing signal to the information management server 10. In this case, the terminal 20 may send only information indicating that the game is started to the information management server 10.

Moreover, it is not necessary to display the selection screen if only one game can be executed at the terminal 20.

Next, in step S12, a data receiving processing is performed. In this processing, the program necessary for proceeding the game, image information necessary for requesting the player to input the personal information and the like are received by the CPU 236 from the information management server 10. The information management server 10 was requested for the above program and image information by the CPU 236 in the foregoing step S11. The CPU 236 then causes the hard disk drive 242, the RAMs 240 and 260, the image data memory 270 and the like to store the received information as appropriate. For example, the program necessary for proceeding the game is stored in the hard disk drive 242. The image information necessary for requesting the player to input the personal information is stored in the image data memory 270. After this processing is completed, the flow shifts to step S13.

Note that, if the CPU 236 does not request the information management server 10 to send the data in step S11, the step S12 is not required.

Next, in a processing of step S13, the game is started. In this processing, the program related to the game that is selected by the player in step S11 is read out by the CPU 236 from the ROM 238 or the hard disk drive 242, and then the CPU 236 executes the program. After the processing is completed, the flow shifts to step S14.

Next, in a processing of step S14, image information is selected. In this processing, the CPU 236 instructs the CPU 256 incorporated within the auxiliary controller to display an image in accordance with the game program which is being executed. The CPU 256 which has received the instruction causes the VDP 262 to select appropriate image information. The image information is stored in the image data ROM 268 or the image data memory 270. After this processing is completed, the flow shifts to step S15.

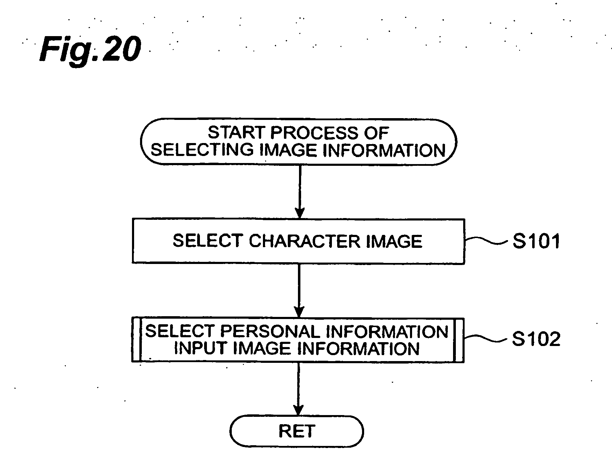

The processing of image information selection in step S14 is described more specifically. Fig. 20 is a flowchart of the processing concerning image information selection. In this processing, first of all, signals for displaying background image data and character image data are outputted from the CPU 236 to the CPU 256 in accordance with the game program, in step S101. These signals include positional information for displaying the character image data, and the like. Following these signals, the CPU 256 causes the VDP 262 to select the background image data and the character image data from the image data ROM 268 or the image data memory 270 and to set the image information at an appropriate position in the video RAM 266.

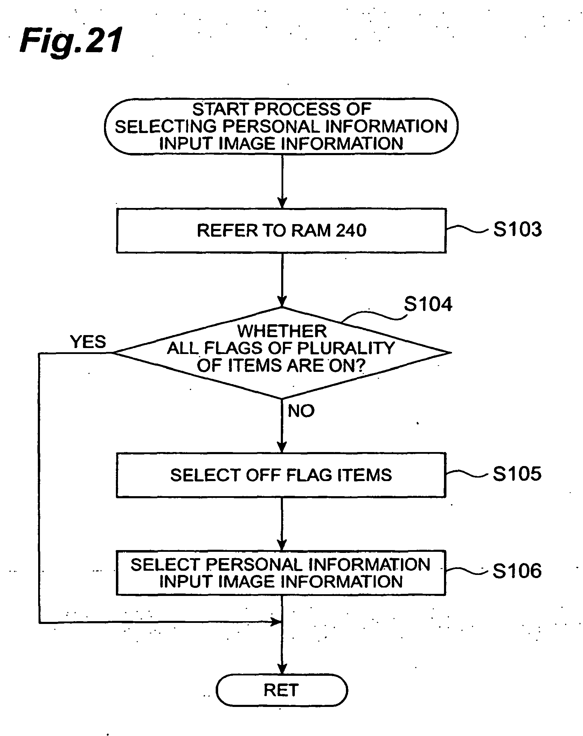

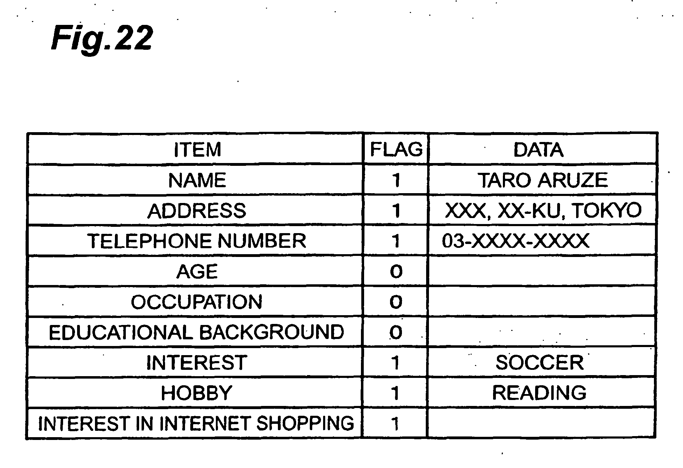

Next, in step S102, the CPU 236 executes a processing of selecting personal information input image information. Fig. 21 is a flowchart of the process of selecting the personal information input image information. In this processing, in step S103, the CPU 236 refers to the RAM 240. In the RAM 240, the personal information inputted by the player is stored. Fig. 22 is a view showing an example of a format of storing the personal information.

As shown in Fig. 22, in the RAM 240, the data inputted by the player is stored, corresponding to the plurality of items which form the personal information. Each of the plural items corresponds to a flag. The flag corresponded to the item which has been already inputted is ON (in Fig. 22, "1" designates ON). On the other hand, the flag corresponded to the item which has not been inputted is OFF (in Fig. 22, "0" designates OFF).

In step S104, the CPU 236 refers to the RAM 240 and determines whether all of the flags corresponded to the plurality of items are ON. When there are flags which are OFF, the processing shifts to step S105. In step S105, the CPU 236 refers to the RAM 240 and selects the items corresponding to the flags which are OFF. These items can be extracted from the front in an order of the items on the list. Alternatively, the CPU 236 may generate random numbers and select the items corresponding to the flags which are OFF in accordance with the random numbers.

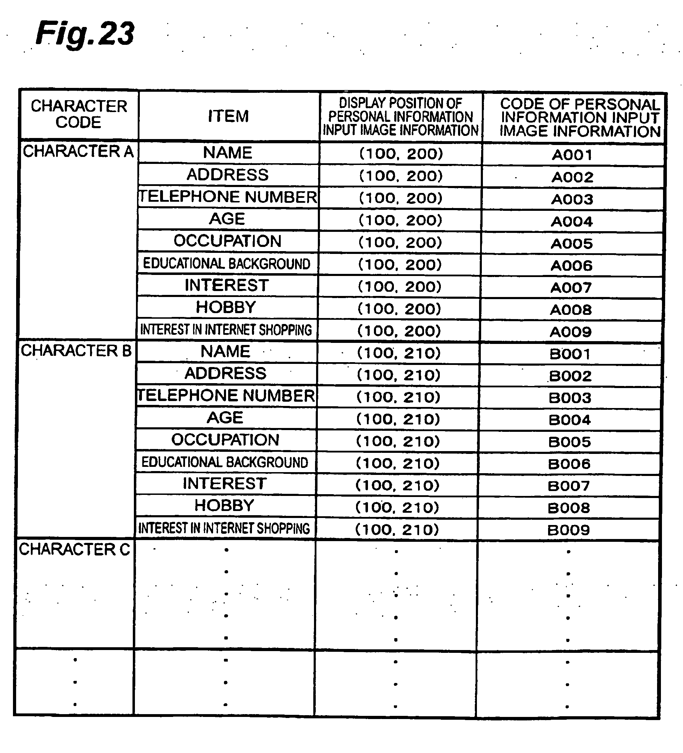

After the item is selected, the CPU 236 performs a processing for causing the VDP 262 to select the personal information input image information in step S106. Here, a table is stored in the RAM 240. In this table, a display position of the personal information input image information and a code of the personal information input image information are corresponded to a character code related to the character image data, and each of the items. The code of the personal information input image information is for specifying the personal information input image information. Fig. 23 is a view showing an example of the table. As shown in Fig. 23, in this table, the character code corresponds to the plurality of items which form the personal information. Each of the plurality of items corresponds to the code of the personal information input image information and the display position of the personal information input image information. The code of the personal information input image information is information for specifying the personal information input image information stored in the image data ROM 268 or the image data memory 270. For example, the code of the personal information input image information and an address where the personal information input image information is stored, which correspond to each other, may be registered in an image information data table which the VDP 262 refers to when synthesizing image data. Note that, the code of the personal information input image information may be an address of the personal information input image information stored in the image data ROM 268 or the image data memory 270.

The CPU 236 refers to the table stored in the RAM 240 and thus selects the display position of the personal information input image information and the code of the personal information input image information, which are corresponded to the character code of the character image data and the item that are selected at present. Thus, the CPU 236 enables an appropriate personal information input image, combined with the currently selected character image data, to be displayed at an appropriate position. For example, the CPU 236 can cause the image data ROM 268 or the image data memory 270 to store the personal information input image information which is generated based on a font, text and the like suitable for each of the plurality of characters. The CPU 236 can also enable the code of the personal information input image information, which specifies the personal information input image information, to correspond to the character code in the aforementioned table.

The CPU 236 outputs a signal to the CPU 256. This signal contains the display position of the personal information input image information and the code of the personal information input image information, which are selected as the aforementioned manner. Following the signal, the CPU 256 causes the VDP 262 to select the personal information input image information from the image data ROM 268 or the image data memory 270. The CPU 256 then causes the VDP 262 to set the personal information input image information at an appropriate position in the video RAM 266. The appropriate position in the video RAM 266 is specified by the display position of the personal information input image information.

Meanwhile, in step S104, when the CPU 236 determines that all of the flags are ON, the foregoing processing is not executed.

Next, in a processing of step S15, the image information is displayed. In this processing, the CPU 236 instructs the CPU 256 to display the image information which is set in the video RAM 266. Upon receipt of the instruction, the CPU 256 instructs the VDP 262 to display the image information. Thus, a game image containing the image information is displayed on the image display device 202. After the above processing is completed, the flow shifts to step S16.

Next, in a processing of step S16, it is determined whether the data input by the player is required. In this processing, the CPU 236 determines whether the image information displayed in step S15 is requesting the player to input data. When the CPU 236 determines that the image information is not requesting the player to input data, the next image information can be displayed. Thus, the flow shifts to step S21. On the other hand, when the CPU 236 determines that the image information is requesting the player to input data, the next image information cannot be displayed until the data is inputted. Thus, the flow shifts to step S17.

Next, in a processing of step S17, it is determined whether the player has inputted data. In this processing, the CPU 236 determines whether the data is inputted by the player through the touch sensor 214, in response to the request in the image information displayed in the aforementioned step S15. When the CPU 236 determines that a signal indicating data input is not yet received from the touch sensor 214, the CPU 236 repeats this step. On the other hand, when the CPU 236 determines that the signal indicating the data input is received, the flow shits to step S18.

Note that various kinds of information are inputted to the terminal 20 of this embodiment by use of the touch sensor 214 provided in the image display device 202. Information may also be inputted by an operation unit such as a keyboard, a command switch or the like, instead of the touch sensor 214. In other words, any kind of terminal 20 can be applied as long as it is provided with the operation unit generating an input signal which reflects the player's intention.

Next, in a processing of step S18, the inputted data is saved. In this processing, the CPU 236 stores the inputted data in the RAM 240. This data is identified by the signal which has determined that the data was received in the aforementioned step S17. The inputted data is accumulated as one item of the personal information and/or used as data required for proceeding the game. After the processing is completed, the flow shits to step S19.

Next, in a processing of step S19, it is determined whether the input of the personal information is continued. In this processing, the CPU 236 displays a question in the image information displayed in the aforementioned step S15, regarding whether the player wants to receive a service where the personal information is used. The CPU 236 then determines whether the data inputted by the player for the displayed question indicates that the player does not want to receive the service.

When the CPU 236 determines that the data inputted by the player indicates that the player requests for provision of the service or that no question was asked regarding the request for the service, the flow shifts to step S21. On the other hand, when the CPU 236 determines that the data inputted by the player indicates that the player does not request for provision of the service, the flow shifts to step S20.

Note that, during the game, every player can be requested to input all items of the personal information without being asked the question regarding whether the player wants to receive the service where the personal information accumulated as mentioned above is used. In this case, the processing of step S19 and a later-described processing of step S20 are not performed.

Next, in a processing of step S20, the image information data table to be referred to is changed. In this processing, the CPU 236 instructs the CPU 256 to change the image information data table to be referred to when an image is combined in the VDP 262. Accordingly, for displaying an image after the change, different image information data is referred to for synthesizing the image to be displayed. Thus, the image information for requesting the player to input the personal information is no longer displayed. After the above processing is completed, the flow shifts to step S21.

Note that, instead of changing the image data table for reference, the CPU 236 can be controlled in a program so that the image information for requesting the player to input the personal information is not selected. In this case, step S20 is not performed. To be more specific, when the data inputted by the player as above indicates that the player does not want to receive the service, the CPU 236 may cause the RAM 240 to store a flag indicating the player's intention, as a flag which is ON. The CPU 236 can skip the processing of selecting the personal information input image information (step S102). Thus, the CPU 236 may be controlled so as not to perform the processing of selecting the personal information input image information.

Next, in a processing of step S21, it is determined whether the game is ended. In this processing, the CPU 236 determines whether the game program which is being executed is ended. When the CPU 236 determines that the game program is not over, the flow returns to step S14. On the other hand, when the CPU 236 determines that the game program is ended, the flow shifts to step S22.

Next, in a processing of step S22, it is determined whether the personal information input is completed. In this processing, the CPU 236 determines whether the personal information input was continued or stopped in the aforementioned step S19. As soon as it is determined that the personal information input was stopped in step S19 and thus is not yet completed, the CPU 236 terminates the subroutine without performing any processes. On the other hand, when it is determined that the personal information input was continued and thus input of all items is now completed, the CPU 236 proceeds to a processing of step S23.

Next, in a processing of step S23, an end of the personal information input is reported. In this processing, the CPU 236 transmits information indicating that the personal information input by the player is ended to the information management server 10. After the processing is completed, the flow shifts to step S24. Note that this step S23 may be adopted as one that is not executed.

Next, in a processing of step S24, a screen for requesting the permission to register the personal information is displayed. In this processing, the CPU 236 instructs the CPU 256 to display the screen on the image display device 202 for obtaining the permission to register the personal information. Upon receipt of the instruction, the CPU 256 causes the VDP 262 to combine the screen and then causes the image display device 202 to display the screen. After the processing is completed, the flow shifts to step S25.

Note that, this step S24 may be executed after the instruction to display the abovementioned screen is received from the information management server 10. In this case, the processing of step S23 described earlier becomes an essential processing for generating this instruction.

Next, in a processing of steps S25, it is determined whether the permission of the player is obtained. In this processing, the CPU 236 determines whether a signal indicating that permission for personal information registration is given or not is received from the touch sensor 214 by the input made by the player. As soon as the CPU 236 determines that the signal indicating permission is not given for personal information registration is received from the touch sensor 214, the CPU 236 terminates the subroutine without performing any processes. On the other hand, when the CPU 236 determines that the signal indicating the permission is given for the personal information registration is received from the touch sensor 214, the CPU 236 proceeds to a processing of step S26.

Next, in the processing of step S26, it is reported that the permission for the personal information registration is obtained. In this processing, the CPU 236 transmits information indicating that the permission for the personal information registration is obtained to the information management server 10. After the processing is completed, the flow shifts to step S27. Note that step S26 may not be executed.

Next, in a processing of step S27, a screen is displayed in order to request the player to confirm the inputted personal information. In this processing, the CPU 236 outputs an instruction to the CPU 256 to display the screen on the image display device 202 for requesting the player to confirm the inputted personal information. At the same time, the personal data stored in the RAM 240 is transmitted by the CPU 236 to the CPU 256. Upon receipt of the instruction and the data, the CPU 256 causes the VDP 262 to combine the screen and also causes the image display device 202 to display the screen. After the processing is completed, the flow shifts to step S28.

Note that this step S27 may be executed after an instruction to display the screen is received from the information management server 10. In this case, the processing of step S26 described earlier is an essential processing for generating the instruction.

Next, in a processing of step S28, it is determined whether the input by the player indicates if the inputted personal information is incorrect or correct. In this processing, the CPU 236 determines whether the input by the player through the touch sensor 214 indicates that the personal information is incorrect or correct. When the CPU 236 determines that a signal indicating that the personal information is correct is received from the touch sensor 214, the CPU 236 proceeds to a processing of step S30. On the other hand, when the CPU 236 determines that a signal indicating that the personal information is incorrect is received from the touch sensor 214, the CPU 236 proceeds to a processing of step S29.

Next, in a processing of step S29, a screen for correcting the personal information is displayed. In this processing, the CPU236 outputs an instruction to the CPU 256 to cause the image display device 202 to display the screen for correcting the personal information. Upon receipt of the instruction and data, the CPU 256 causes the VDP 262 to combine the screen and also causes the image display device 202 to display the screen. The player corrects the personal information in accordance with the screen. After the processing is completed, the flow returns to step 527.

Meanwhile, in the processing of step S30, the personal information is transmitted. In this processing, the CPU 236 transmits the personal information stored in the RAM 240 to the information management server. After this processing is completed, the flow shifts to step S31.

Next, in a processing of step S31, an ID code is displayed. In this processing, the CPU 236 causes the image display device 202 to display the ID code transmitted from the information management server. Thus, the player can be informed of the ID code. After this processing is completed, the CPU 236 terminates this subroutine.

Note that the processes of steps from S11 to S31 are executed in accordance with the program stored in the ROM 238 or the hard disk drive 242 which are incorporated in the terminal 20. Instead of this, each of the steps from S11 to S31 may be partially or entirely executed in accordance with instructions from the information management server 10.

[Processing in Server]

First of all, the information management server 10 transmits data in a processing of step S41. In this processing, the CPU 110 transmits data which was requested by the signal transmitted from the terminal 20 out of the data stored in the hard disk drive 118. After the processing is completed, the flow shifts to step S42.

Next, in a processing of step S42, the CPU 110 transmits the instruction to the terminal 20 to display the screen for requesting the player to provide his/her permission for the personal information registration. In this processing, the CPU 110 receives the signal from the terminal 20, the signal indicating that the personal information input is completed. Thereafter, the CPU 110 transmits an instruction to the terminal 20 to display the screen for obtaining the permission for the personal information registration. After the processing is completed, the flow shifts to step S43.

Next, in a processing of step S43, the CPU 110 transmits an instruction to the terminal 20 to display the screen for the player to confirm the content of the inputted personal information. In this processing, the CPU 110 receives the signal from the terminal 20, the signal indicating that the permission for the personal information registration is obtained. Thereafter, the CPU 110 transmits the instruction to the terminal 20 to display the screen for the player to confirm the content of the personal information. After the processing is completed, the flow shifts to step S44.

Next, in a processing of step S44, the personal information is registered. In this processing, the CPU 110 receives the personal information from the terminal 20. The CPU 110 saves the received data into the hard disk drive 118. Simultaneously, the CPU 110 sets the ID code to the personal information and registers the same in a database in the hard disk drive 118. Thus, it becomes possible to use the ID code as data for membership registration in various services and the like. After this processing is completed, the flow shifts to step 545.

Next, in a processing of step S45, the ID code is transmitted. In this processing, the CPU 110 transmits the ID code to the terminal 20. After this processing is completed, the subroutine is terminated.

Note that the processing of each of the steps from S41 to S43 may not be executed.

In addition, it is possible to provide a processing for generating an instruction to the terminal 20 to partially or entirely executing each of the foregoing steps from S11 to S31.

In the forgoing subroutine executed in the terminal 20 and the information management server 10, the personal information are transmitted to the information management server 10 at once after all of the items of the personal information is inputted. Alternatively, every time one of the items is inputted, data of the inputted item may be transmitted to the information management server 10.

By executing each of the aforementioned steps from S11 to S45, input of the personal information of the player is completed while the player is enjoying the game as usual. Thus, the player can complete data input for membership registration without feeling bothered by the membership registration for receiving a service, for example, in an internet site and the like.

Further, since the personal information is not transmitted from the terminal to the information management server during the game, a progress of the game is not affected even in a game terminal in an environment of a low communication speed.

Yet further, by executing the foregoing steps S19 and S20, acquisition of the personal information can be finished in a halfway of acquiring the personal information of the player as soon as it is found that the player does not intend to receive the service where the personal information is used. Thus, the game proceeds swiftly.

Moreover, by executing the foregoing steps from S24 to S26 and the step S42, the personal information accumulated during the game is saved after it is confirmed that the personal information can be provided to a third party. Thus, consideration can be given to the player who does not want to provide the personal information to the third party.

Furthermore, by executing the foregoing steps from S27 to S29 and the step S43, it is confirmed whether the content of the personal information is correct before the personal information is saved. Thus, storage of incorrect personal information can be avoided.

[Processing of Transmitting Personal Information to External Device]

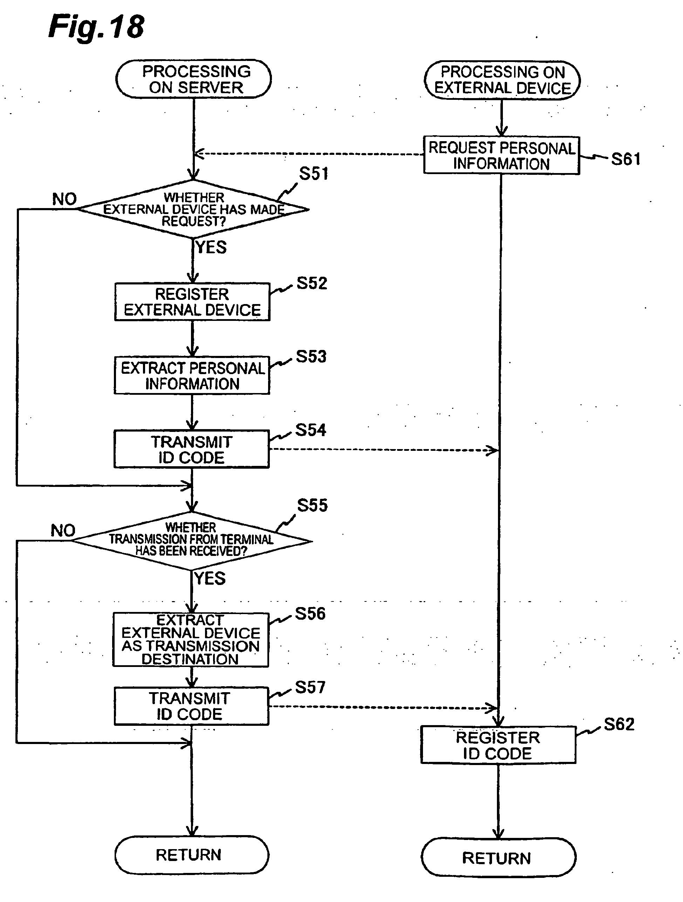

Description is given with regard to processing performed in the information management server 10 and the external device 30 in order to provide the personal information stored in the information management server 10 to the external device 30. Fig. 18 is a chart showing a subroutine of a program executed in the information management server 10 and the external device 30.

First of all, in a processing of step S51, it is determined in the information management server 10 whether the external device 30 has made a request for provision of the personal information. In this processing, the CPU 110 determines whether the information management server 10 has received a signal indicating the request for provision of the personal information and a signal indicating a condition for the personal information. When the CPU 110 determines that the above signals have not been received, the flow shifts to step S55. On the other hand, when the CPU 110 determines that the above signals have been received, the flow shifts to step S52.

Next, in a processing of step S52, data related to the external device is registered. In this processing, the CPU 110 records the data related to the external device 30 into the hard disk drive 118. This external device made a request in the abovementioned step S51. The data related to the external device 30 includes the address of the external device 30, the condition for the requested personal data and the like. After the processing is completed, the flow shifts to step 553.

Next, in a processing of the step S53, the personal information is extracted. In this processing, the CPU 110 checks the condition for the personal information requested by the external device 30 in the aforementioned step S51 against the plurality of items of the personal information stored in the hard disk 118, thereby extracting the personal information which meets the request. After the processing is completed, the flow shifts to step S54.

Next, in a processing of step S54, an ID code is transmitted. In this processing, the CPU 110 transmits the ID code to the external device 30 which made a request in the step S51. The ID code corresponds to the personal information extracted in the aforementioned step S53. After this processing is completed, the flow shifts to step S55.

Next, in a processing of step S55, it is determined whether new personal information is received from the terminal 20. In this processing, the CPU 110 determines whether the information management server 10 has received new personal information from the terminal 20. As soon as the CPU 110 determines that new personal information has not been received from the terminal 20, the CPU 110 terminates the subroutine without executing any processes. On the other hand, when the CPU 110 is determined that new personal information has been received from the terminal 20, the CPU 110 proceeds to a processing of step S56.

Next, in the processing of step 556, the external device, to which the personal information is transmitted, is extracted. In this processing, the CPU 110 refers to the information on the external devices stored in the hard disk drive 118. The CPU 110 then specifies the external device which has made the request received in the aforementioned step S55 with a condition conforming to the new personal information. After the processing is completed, the flow shifts to step S57.

Next, in a processing of step S57, the ID code is transmitted. In this processing, the CPU 110 transmits the ID code to the external device 30 specified by the foregoing step 556. This ID code corresponds to the personal information received in the step S55. After the processing is completed, this subroutine is terminated.

Meanwhile, in a processing of step S61, the external device 30 first makes a request for the personal information. In this processing, a CPU incorporated in the external device 30 transmits the signal indicating a request for the personal information and the condition for the personal information. After the processing is completed, the flow shifts to step S62.

Next, in a processing of step S62, the ID code is registered. In this processing, the CPU incorporated in the external device 30 receives the ID code transmitted from the information management server 10 in the aforementioned steps S54 and S57, and causes a storage device connected to the external device 30 to store the ID code. Thus, the ID code is registered in the external device 30 and the personal information corresponding to the ID code becomes available. As soon as this processing is completed, the subroutine is terminated.

[Processing for Online Shopping]

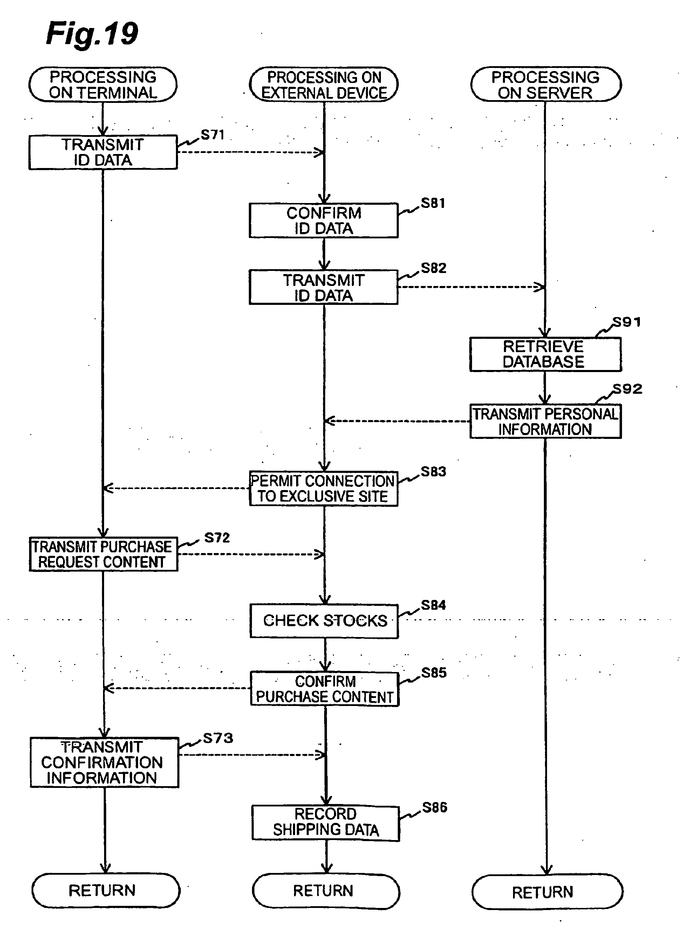

Description is provided with regard to processing executed by the terminal 20, the external device 30 and the information management server 10 when using an online shopping service in the external device 30 by use of the terminal 20. Fig. 19 is a chart showing a subroutine of a program executed in the information management server 10, the terminal 20 and the external device 30, for the processing.

First of all, in a processing of step S71, the terminal 20 transmits ID data. In this processing, the CPU 236 transmits the ID data inputted by a user of the terminal to the external device 30. After the processing is completed, the flow shifts to step S72.

Next, in a processing of the step S72, purchase request content is transmitted. First, verification of the ID data transmitted in the aforementioned step S71 is completed, connection to an exclusive site for online shopping is completed, and then the data related to desired items and the number of the items is inputted by the user of the terminal. Thereafter, the CPU 236 transmits the data related to the desired items and the number of items to the external device 30. After this processing is completed, the flow shifts to step S73.

Next, in a processing of step S73, confirmation information is transmitted. In this processing, the terminal 20 receives information which confirms whether the content of desired items and the number of items are correct from the external device 30. After the user of the terminal makes input which indicates that the content is correct, the terminal 20 transmits information indicating that the content is confirmed to the external device 30. After this processing is completed, this subroutine is terminated immediately.

Meanwhile, in a processing of step S81, the external device 30 first confirms the ID data. In this processing, the CPU incorporated in the external device 30 confirms whether the ID data transmitted from the terminal 20 in the foregoing step S71 has been registered in the external device 30. After the processing is completed, the flow shifts to step S82.

Next, in a processing of step S82, the ID data is transmitted. After it is confirmed that the ID data has been registered, the CPU incorporated in the external device 30 transmits the ID data received from the terminal 20 to the information management server 10. After this processing is completed, the flow shifts to step S83.

Next, in a processing of step S83, connection to the exclusive site is permitted. The personal data, which corresponds to the ID data transmitted in the aforementioned step S82, is transmitted from the information management 10. Thereafter, the CPU incorporated in the external device 30 allows the terminal 20 to have a connection to the exclusive site for the online shopping. Thus, the terminal 20 is enabled to connect to the exclusive site, thereby an online shopping service becomes available. After this processing is completed, the flow shifts to the step S84.

Next, in a processing of step S84, stocks are checked. In this processing, the CPU incorporated in the external device 30 checks whether there are stocks of the desired items, based on the information regarding the desired items and the number of the items transmitted from the terminal 20. After this processing is completed, the flow shifts to the step S85.

Next, in a processing of step S85, it is confirmed whether the items to be purchased and the number of these items are correct. After the stocks thereof are checked, the CPU incorporated in the external device 30 causes the terminal 20 to display a screen to confirm whether the content of the information regarding the desired items and the number of the items is correct. After the processing is completed, the flow shifts to step S86.

Next, in a processing of step S86, shipping data is recorded. After receipt of a signal indicating that the content of the desired items and the number of the items is correct from the terminal 20, the information containing the desired items, the number of the items, as well as a destination address and a name which are included in the personal information are recorded as shipping data. Thus, the items can be shipped to the user of the terminal. After the above processing is completed, this subroutine is terminated.

In a processing of step S91, the information management server 10 first searches a database. In this processing, the CPU 110 searches the database stored in the hard disk drive 118 and retrieves the personal information which corresponds to the ID data transmitted from the external device 30 in the foregoing step S82. After this processing is completed, the flow shifts to step S92.

Next, in a processing of step S92, the personal information is transmitted. In this processing, the personal information retrieved in the aforementioned step S91 is transmitted by the CPU 110 to the external device 30. After the processing is completed, this subroutine is terminated.

Note that the foregoing processing of the steps from S71 to S92 is merely one of embodiments in online shopping, and may open the site to anyone and request for the ID data when the desired item is decided. The order of the processes is not limited to that described in this embodiment.

The principles of the present invention have been illustrated and described in the preferred embodiments, but it is apparent to a person skilled in the art that the present invention can be modified in arrangement and detail without departing from such principles.

## Claims

1. A personal information input system (1), comprising:
a plurality of game terminals (20, 22, 24) ;
an information management server (10) arranged to be capable of communicating with each of the plurality of game terminals;
an external device (30) arranged to be capable of communicating with the information management server; and
a storage device connected to the external device,
wherein
each of the game terminals comprises:
input means arranged to allow a player to input personal information; and
first transmitting means arranged to transmit the inputted personal information to the server, and
the information management server comprises:
receiving means (122) arranged to receive the personal information transmitted from the game terminal;
second storing means (118) arranged to store the personal information received by the receiving means;
ID code setting means (110) arranged to set an ID code corresponding to the personal information stored in the second storing means; and
second transmitting means (122) arranged to transmit the ID code set by the ID code setting means to the game terminal,
and wherein
the external device is arranged to:
transmit to the information management server data related to the external device including a request for the provision of personal information and a signal indicating a condition for the personal information; and
receive and store in a storage device an ID code received from the information management server such that said ID code is registered at the external device and the personal information corresponding to said ID code becomes available to the external device, and
the information management server is arranged to:
receive and record the data related to the external device;
check the condition of the personal information requested against the plurality of items of personal information stored in the second storing means;
extract from the second storing means personal information that meets the request;
transmit to the external device the ID code corresponding to the extracted personal information; and
determine whether new personal information has been received from the terminal and, if so, transmit the ID code corresponding to the personal information to the external device which has made the request with a condition conforming to the new personal information,
and wherein
the game terminals each further comprise:
image display means (202) arranged to display an image;
control means (230) arranged to execute a game program;
first storing means arranged to store a plurality of pieces of personal information input image information adapted to prompt a player to input personal information about the player, and character information concerning a character image for constituting the game image; and
drawing means (236) arranged to be capable of constituting the game image by appropriately combining a plurality of data containing the personal information input image information,
wherein the game terminal is arranged to prompt the player to input personal information that contains a plurality of items at a plurality of timings as data for constituting a game image displayed on the image display means, the game being executed based on the game program.

2. The personal information input system (1) according to claim 1,
wherein each of the game terminals (20, 22, 24) further comprises third storing means (240) arranged to store a plurality of pieces of complete information which identify whether an input by the player has been completed for the plurality of items contained in the personal information,
the control means (230) is arranged to cause the third storing means (240) to store the pieces of complete information for the items for which the input by the player has been completed, and to output an instruction, to the drawing means (236) to combine the personal information input image information corresponding to the items, among the plurality of items, for which the input by the player has not been completed with the character information based on the plurality of pieces of complete information.

3. The personal information input system (1) according to claim 1 or 2, wherein the first storing means (242) is arranged to store a plurality of pieces of character information concerning a plurality of character images, and to store the plurality of pieces of personal information input image information corresponding to the plurality of items in relation to each of the plurality of pieces of character information, and
the control means (230) is arranged to output an instruction to the drawing means (236) in order to cause the drawing means to select the personal information input image information to be combined with the character image to be included in the game image from among the plurality of pieces of personal information input image information related to the character information on the character images.

4. The personal information input system (1) according to one of claims 1 to 3, wherein the drawing means (236) is further arranged to be capable of creating the image of the game without using the personal information input image information, and
the control means (230) is arranged to cause the drawing means (236) to create the image of the game without using the personal information input image information in accordance with the game program when information that no benefit is desired to be provided through use of the personal information at a device (30) to which the second transmitting means (122) can transmit the ID code is contained in one of the items of the personal information.

5. The personal information input system (19 according to one of claims 1 to 4, wherein the first transmitting means (248) is arranged to transmit the personal information after the input is completed for al of the plurality of items.

6. The personal information input system (1) according to one of claims 1 to 5, wherein the second storing means (118) is arranged to store the personal information only when permission information, which indicates that permission for providing the personal information to a third party has been received from the player, is received from the game terminal (20, 22, 24).

7. The personal information input system (1) according to one of claims 1 to 6, wherein the second storing means (118) is arranged to store the personal information only when whether the personal information is correct information or not is confirmed through the image display means (202) of the game terminal (20, 22, 24) and confirmation information indicating that the player has made confirmation is received from the game terminal.

8. An information management server (10) arranged to be capable of communicating with a plurality of game terminals (20, 22, 24), which allow a player to input personal information containing a plurality of items, and an external device (30), comprising:
receiving means (122) arranged to receive from a game terminal personal information containing a plurality of items;
storing means (118) arranged to store the personal information received by the receiving means;
ID code setting means (110) arranged to set an ID code corresponding to the personal information stored in the storing means, and
transmitting means (122) arranged to transmit the ID code set by the ID code setting means to the game terminal,
wherein
the information management server is arranged to:
receive and record data related to the external device including a request for the provision of personal information and.a signal indicating a condition for the personal information;
check the condition of the personal information requested against the plurality of items of personal information stored in the storing means;
extract from the storing means personal information that meets the request;
transmit to the external device the ID code corresponding to the extracted personal information; and
determine whether new personal information has been received from the terminal and, if so, transmit the ID code corresponding to the personal information to the external device which has made the request with a condition conforming to the new personal information,
wherein
the receiving means is arranged to receive the personal information containing a plurality of items from a game terminal that allows a player to input the personal information containing a plurality of items in response to display of a plurality of pieces of personal information input image information for requesting a player to input the plurality of items at a plurality of timings as data for constituting a game image executed based on a game program at the game terminal.

9. The information management server (10) according to claim 8, wherein the receiving means (122) is arranged to receive the personal information stored in the game terminal (20, 22, 224) after all of the plurality of items are inputted in response to the plurality of pieces of personal information input image information.

10. The information management server (10) according to claim 8 or 9, further arranged such that the storing means (118) is caused to store the personal information only when permission information, which indicates that permission for providing the personal information stored in the game terminal (20, 22, 24) to a third party has been received from the player, is received from the game terminal.

11. The information management server (10) according to one of claims 8 to 10, wherein the storing means (118) is arranged to store the personal information only when whether the personal information stored in the game terminal (20, 22, 24) is correct information or not is confirmed through an image display (202) of the game terminal (20, 22, 20) and confirmation information indicating that the player has made confirmation is received from the game terminal.

12. A personal information obtaining method executed by a personal information input system including a plurality of game terminals (20, 22, 24), an information management server (10), an external device (13) and a storing device connected to the external device, wherein the information management server is arranged to be capable of communicating with each of the plurality of game terminals and the external device is arranged to be capable of communicating with the information management server, the method comprising the steps of:
transmitting the personal information to the information management server from the game terminal;
receiving the personal information transmitted from the game terminal in the information management server;
storing the personal information in the information management server;
setting an ID code corresponding to the personal information in the information management server;
transmitting the ID code to the game terminal from the information management server;
transmitting from the external device to the information management server data related to the external device including a request for provision of personal information and a signal indicating a condition for the personal information;
receiving at the external device, and storing in the storage device, an ID code received from the information management server such that said ID code is registered at the external device and the personal information corresponding to said ID code becomes available to the external device;
receiving and recording at the information management server the data related to the external device;
checking at the information management server the condition of the personal information requested by the external device against a plurality of items of personal information stored in a storing means of the information management server;
extracting from the storing means personal information that meets the request received from the external device;
transmitting from the information management server to the external device the ID code corresponding to the extracted personal information; and
determining whether new personal information has been received from the terminal and, if so, transmitting the ID code corresponding to the personal information to the external device which has made the request with a condition conforming to the new personal information,
and further comprising the steps of:
displaying a game image in the game terminal;
storing a plurality of pieces of personal information input image information for causing a player to input personal information about the player containing a plurality of items at a plurality of timings as data for constituting the game image, the game being executed based on a game program, and character information on a character image for constituting the game image in the game terminal; and
constituting the game image by combining a plurality of data containing the personal information input image information and the character information in the game terminal.

## Patentansprüche

1. Personen-Informationseingabesystem (1), umfassend:
eine Vielzahl von Spiel-Terminals (20, 22, 24);
einen Informations-Management-Server (10), ausgelegt zum Kommunizieren mit jedem der Vielzahl von Spiel-Terminals;
eine externe Vorrichtung (30), ausgelegt zum Kommunizieren mit dem Informations-Management-Server; und
eine mit der externen Vorrichtung verbundene Speicher-Vorrichtung,
wobei
jedes der Spiel-Terminals umfasst:
eine Eingabeeinrichtung, die ausgelegt ist, es einem Spieler zu erlauben, Personen-Information einzugeben; und
eine erste Übertragungseinrichtung, ausgelegt zum Übertragen der eingegebenen Personen-Information an den Server, und
wobei der Informations-Management-Server umfasst:
eine Empfangseinrichtung (122), ausgelegt zum Empfangen der von dem Spiel-Terminal übertragenen Personen-Information;
eine zweite Speichereinrichtung (118), ausgelegt zum Speichern der von der Empfangseinrichtung empfangenen Personen-Information;
eine ID-Code-Einstelleinrichtung (110), ausgelegt einen mit einer in der zweiten Speichereinrichtung gespeicherten Personen-Information verbundenen ID-Code einzustellen; und
eine zweite Übertragungseinrichtung (122), ausgelegt zum Übertragen des durch die ID-Code-Einstelleinrichtung eingestellten ID-Codes an das Spiel-Terminal,
und wobei
die externe Vorrichtung ausgelegt ist zum:
Übertragen von zu der externen Vorrichtung gehörenden Daten an den Informations-Management-Server, einschließlich einer Anforderung zur Bereitstellung von Personen-Information und eines einen Zustand für die Personen-Information anzeigenden Signals; und
Empfangen und Speichern eines von dem Informations-Management-Server empfangenen ID-Codes in einer Speicher-Vorrichtung, so dass der ID-Code bei der externen Vorrichtung registriert ist und die zu dem ID-Code gehörende persönliche Information für die externe Vorrichtung verfügbar ist, und
wobei der Informations-Management-Server ausgelegt ist zum:
Empfangen und Aufnehmen der zu der externen Vorrichtung gehörenden Daten;
Überprüfen des Zustandes der angeforderten Personen-Information gegenüber der Vielzahl von Einträgen der in der zweiten Speichereinrichtung gespeicherten Personen-Information;
Extrahieren von die Anforderung erfüllenden Personen-Information aus der zweiten Speichereinrichtung;
Übertragen des mit der extrahierten Personen-Information verbundenen ID-Codes an die externe Vorrichtung; und
Bestimmen, ob neue Personen-Information von dem Terminal empfangen wurde, und in diesem Fall, Übertragen des mit der Personen-Information verbundenen ID Codes an die externe Vorrichtung, die die Anfrage gestellt hat, mit einem mit der neuen Personen-Information übereinstimmenden Zustand,
und wobei
jedes der Spiel-Terminals ferner umfasst:
eine Bildanzeigeeinrichtung (202), ausgelegt zum Anzeigen eines Bildes;
eine Steuereinrichtung (230), ausgelegt zum Ausführen eines Spielprogramms;
eine erste Speichereinrichtung, ausgelegt zum Speichern einer Vielzahl von Teilen von Personen-Informations-Eingabebild-Information, die ausgelegt ist, einen Spieler aufzufordern, Personen-Information über den Spieler und Zeichen-Information bezüglich eines Zeichenbildes zum Darstellen des Spiel-Bildes einzugeben; und
eine Abbildungseinrichtung (236), ausgelegt zum Darstellen des Spiel-Bildes durch ein geeignetes Kombinieren einer Vielzahl von die Personen-Informations-Eingabe-Bild-Information enthaltenen Daten
wobei das Spiel-Terminal ausgelegt ist, den Spieler aufzufordern, eine Vielzahl von Einträgen enthaltene Personen-Information, zu einer Vielzahl von Zeiten, als Daten einzugeben, zum Darstellen eines auf der Bildanzeigeeinrichtung angezeigten Spiel-Bildes, wobei das Spiel auf Grundlage des Spiel-Programms ausgeführt wird.

2. Personen-Informationseingabesystem (1) nach Anspruch 1,
wobei jedes der Spiel-Terminals (20,22,24) ferner eine dritte Speichereinrichtung (240) umfasst, angeordnet zum Speichern einer Vielzahl von Teilen kompletter Informationen, die identifizieren, ob eine Eingabe durch einen Spieler für die Vielzahl von in der persönlichen Information enthaltenen Einträgen abgeschlossen wurde,
wobei die Steuereinrichtung (230) ausgelegt ist, die dritte Speichereinrichtung (240) zu veranlassen, die Teile der kompletten Information für die Einträge zu speichern, für die die Eingabe durch den Spieler abgeschlossen wurde, und eine Instruktion an die Abbildungseinrichtung (236) auszugeben, um die zu den Einträgen gehörende Personen-Informations-Eingabe-Bild-Information unter der Vielzahl von Einträgen, für den die Eingabe durch den Spieler nicht abgeschlossen wurde, mit der Zeichen-Information zu kombinieren, auf Grundlage der Vielzahl von Teilen der kompletten Information.

3. Personen-Informationseingabesystem (1) nach Anspruch 1 oder 2, wobei die erste Speichereinrichtung (242) ausgelegt ist, eine Vielzahl von Teilen von Zeichen-Information bezüglich einer Vielzahl von Zeichen-Bildern zu speichern, und die Vielzahl von Teilen von Personen-Informations-Eingabe-Bild-Information zu speichern, die mit der Vielzahl von Einträgen bezüglich der Vielzahl von Teilen der Zeichen-Information verbunden sind, und
wobei die Steuereinrichtung (230) ausgelegt ist, eine Instruktion an die Abbildungseinrichtung (236) auszugeben, um die Abbildungseinrichtung zu veranlassen, die Personen-Informations-Eingabe-Bild-Information zu wählen, die mit dem Zeichen-Bild kombiniert wird, um in das Spiel-Bild eingefügt zu werden, unter der Vielzahl von Teilen der Personen-Informations-Eingabe-Bild-Information, die zu der Zeichen-Information auf den Zeichen-Bildern gehört.

4. Personen-Informationseingabesystem (1) nach einem der Ansprüche 1 bis 3, wobei die Abbildungseinrichtung (236) ferner ausgelegt ist zum Erzeugen des Spiel-Bildes, ohne Verwendung der Personen-Informations-Eingabe-Bild-Information, und
die Steuereinrichtung (230) ausgelegt ist, die Abbildungseinrichtung (236) zu veranlassen, das Spiel-Bild ohne Verwendung der Personen-Informations-Eingabe-Bild-Information in Übereinstimmung mit dem Spielprogramm zu erzeugen, wenn Information, mit der es nicht erwünscht ist, einen Vorteil durch Verwendung der Personen-Information an einer Vorrichtung (30), an die die zweite Übertragungseinrichtung (122) den ID-Code übertragen kann, bereitzustellen, in einem der Einträge der Personen-Information enthalten ist.

5. Personen-Informationseingabesystem (1) nach einem der Ansprüche 1 bis 4, wobei die erste Übertragungseinrichtung (248) ausgelegt ist, die Personen-Information zu übertragen, nachdem die Eingabe für alle der Vielzahl von Einträgen abgeschlossen ist.

6. Personen-Informationseingabesystem (1) nach einem der Ansprüche 1 bis 5, wobei die zweite Speichereinrichtung (118) ausgelegt ist, die Personen-Information nur zu speichern, wenn eine Genehmigungs-Information, die anzeigt, dass eine Genehmigung zum Bereitstellen der Personen-Information an Dritte von dem Spieler empfangen wurde, von dem Spiel-Terminal (20, 22, 24) empfangen wird.

7. Personen-Informationseingabesystem (1) nach einem der Ansprüche 1 bis 6, wobei die zweite Speichereinrichtung (118) ausgelegt ist, die Personen-Information nur zu speichern, wenn durch die Bildanzeigeeinrichtung (202) des Spiel-Terminals (20, 22, 24) bestätigt ist, ob die Personen-Information eine korrekte Information oder nicht, und eine Bestätigungs-Information, die anzeigt, dass der Spieler eine Bestätigung gemacht hat, von dem Spiel-Terminal empfangen wird.

8. Informations-Management-Server (10), ausgelegt zum Kommunizieren mit einer Vielzahl von Spiel-Terminals (20, 22, 24), die es einem Spieler erlauben, eine Vielzahl von Einträgen enthaltene Personen-Information einzugeben, und mit einer externen Vorrichtung (30), umfassend:
eine Empfangseinrichtung (122), ausgelegt zum Empfangen von eine Vielzahl von Einträgen enthaltenen Personen-Information, von einem Spiel-Terminal;
eine Speichereinrichtung (118), ausgelegt zum Speichern der durch die Empfangseinrichtung empfangenen Personen-Information;
eine ID-Code-Einstelleinrichtung (110), ausgelegt zum Einstellen eines ID-Codes, der mit der in der Speichereinrichtung gespeicherten Personen-Information verbunden ist, und
eine Übertragungseinrichtung (122), ausgelegt zum Übertragen des durch die ID-Code-Einstelleinrichtung eingestellten ID-Codes an das Spiel-Terminal, wobei
der Informations-Management-Server ausgelegt ist zum:
Empfangen und Aufnehmen von zu der externen Vorrichtung gehörenden Daten, einschließlich einer Anforderung für die Bereitstellung von Personal-Information und eines einen Zustand der Personen-Information anzeigenden Signals;
Überprüfen des Zustandes der angeforderten Personen-Information gegenüber der Vielzahl von Einträgen von in der Speichereinrichtung gespeicherter Personen-Information;
Extrahieren von der Anforderung entsprechenden Personen-Information aus der Speichereinrichtung;
Übertragen des mit der Personen-Information verbundenen ID-Codes an die externe Vorrichtung; und
Bestimmen, ob neue Personen-Information von dem Terminal empfangen wurde, und in diesem Fall, Übertragen des mit der Personen-Information verbundenen ID-Codes an die externe Vorrichtung, die die Anfrage gestellt hat, mit einem mit der neuen Personen-Information übereinstimmenden Zustand,
wobei
die Empfangseinrichtung ausgelegt ist, die eine Vielzahl von Einträgen enthaltene Personen-Information von einem Spiel-Terminal zu empfangen, das es einem Spieler ermöglicht, die eine Vielzahl von Einträgen enthaltene Personen-Information einzugeben, als Antwort auf die Anzeige einer Vielzahl von Teilen der Personen-Informations-Eingabe-Bild-Information zum Anfordern eines Spielers, die Vielzahl von Einträgen zu einer Vielzahl von Zeiten als Daten einzugeben, zum Darstellen eines auf Grundlage eines Spiel-Programms an dem Spiel-Terminal ausgeführten Spiel-Bildes.

9. Informations-Management-Server (10) nach Anspruch 8, wobei die Empfangseinrichtung (122) ausgelegt ist zum Empfangen der in dem Spiel-Terminal (20, 22, 224) gespeicherten Personen-Information, nachdem, als Antwort auf die Vielzahl von Teilen der Personen-Informations-Eingabe-Bild-Information, alle der Vielzahl von Einträgen eingegeben sind.

10. Informations-Management-Server (10) nach Anspruch 8 oder 9, ferner ausgelegt, so dass die Speichereinrichtung (118) veranlasst wird, die Personen-Information nur zu speichern, wenn eine Genehmigungs-Information, die anzeigt, dass eine Genehmigung zum Bereitstellen der in dem Spiel-Terminal (20, 22, 24) gespeicherten Personen-Information an Dritte von dem Spieler empfangen wurde, von dem Spiel-Terminal empfangen wird.

11. Informations-Management-Server (10) nach einem der Ansprüche 8 bis 10, wobei die Speichereinrichtung (118) ausgelegt ist zum Speichern der Personen-Information nur dann, wenn durch eine Bildanzeige (202) des Spiel-Terminals (20, 22, 20) bestätigt wird, ob die in dem Spiel-Terminal (20, 22, 24) gespeicherte Personen-Information eine korrekte Information ist oder nicht, und eine Bestätigungs-Information, die anzeigt, dass der Spieler die Bestätigung gemacht hat, von dem Spiel-Terminal empfangen wird.

12. Personen-Informations-erhaltendes Verfahren, ausgeführt durch ein Personen-InformationseingabeSystem mit einer Vielzahl von Spiel-Terminals (20, 22, 24), einem Informations-Management-Server (10), einer externen Vorrichtung (13) und einer mit der externen Vorrichtung verbundenen Speicher-Vorrichtung, wobei der Informations-Management-Server ausgelegt ist zum Kommunizieren mit jedem der Vielzahl von Spiel-Terminals, und die externe Vorrichtung ausgelegt ist zum Kommunizieren mit dem Informations-Management-Server, wobei das Verfahren die Schritte umfasst:
Übertragen der Personen-Information an den Informations-Management-Server von dem Spiel-Terminal;
Empfangen der von dem Spiel-Terminal übertragenen Personen-Information in dem Informations-Management-Server;
Speichern der Personen-Information in dem Personen-Management-Server;
Einstellen eines zu der Personen-Information gehörenden ID-Codes in dem Informations-Management-Server;
Übertragen des ID-Codes von dem Informations-Management-Server an das Spiel-Terminal;
Übertragen von zu der externen Vorrichtung gehörenden Daten, von der externen Vorrichtung an den Informations-Management-Server, einschließlich einer Anforderung zum Bereitstellen von Personen-Information und eines einen Zustand für die Personen-Information anzeigenden Signals;
Empfangen, an der externen Vorrichtung, und Speichern, in der Speicher-Vorrichtung, eines von dem Informations-Management-Server empfangenen ID-Codes, so dass der ID-Code bei der externen Vorrichtung registriert ist, und die zu dem ID-Code gehörende Personen-Information der externen Vorrichtung zur Verfügung stehen wird;
Empfangen und Aufnehmen der zu der externen Vorrichtung gehörenden Daten in dem Informations-Management-Server;
Überprüfen, in dem Informations-Management-Server, des Zustandes der durch die externe Vorrichtung angeforderten Personen-Information gegen eine Vielzahl von Einträgen der in der Speichereinrichtung des Informations-Management-Servers gespeicherten Personen-Information;
Extrahieren von Personen-Information, die die von der externen Vorrichtung empfangene Anforderung erfüllt, aus der Speichereinrichtung;
Übertragen des mit der extrahierten Personen-Information verbundenen ID-Codes von dem Informations-Management-Servers an die externe Vorrichtung; und
Bestimmen, ob neue Personen-Information von dem Terminal empfangen wurde, und in diesem Fall, Übertragen des mit der Personen-Information verbundenen ID-Codes an die externe Vorrichtung, die die Anforderung gestellt hat, mit einem mit der neuen persönlichen Information übereinstimmenden Zustand
und ferner die Schritte umfassend:
Anzeigen eines Spiel-Bildes in dem Spiel-Terminal;
Speichern einer Vielzahl von Teilen der Personen-Informations-Eingabe-Bild-Information um einen Spieler zu veranlassen zum Eingeben von eine Vielzahl von Einträgen enthaltene Personen-Information über den Spieler, zu einer Vielzahl von Zeiten, als Daten zum Darstellen des Spiel-Bildes, wobei das Spiel auf Grundlage eines Spiel-Programms ausgeführt wird, und von Zeichen-Information auf einem Zeichen-Bild zum Darstellen des Spiel-Bildes in dem Spiel-Terminal; und
Darstellen des Spiel-Bildes durch Kombinieren einer Vielzahl von Daten, die die Personen-Informations-Eingabe-Bild-Information und die Zeichen-Information in dem Spiel-Terminal enthält.

## Revendications

1. Système d'entrée d'informations personnelles (1), comprenant:
une pluralité de terminaux de jeu (20, 22, 24);
un serveur de gestion d'informations (10) agencé pour être capable de communiquer avec chacun de la pluralité de terminaux de jeu;
un dispositif externe (30) agencé pour être capable de communiquer avec le serveur de gestion d'informations; et
un dispositif de stockage relié au dispositif externe,
dans lequel
chacun des terminaux de jeu comprend:
un moyen d'entrée agencé pour permettre à un joueur d'entrer une information personnelle; et
un premier moyen de transmission agencé pour transmettre l'information personnelle entrée au serveur, et
le serveur de gestion d'informations comprend:
un moyen de réception (122) agencé pour recevoir l'information personnelle transmise à partir du terminal de jeu;
un deuxième moyen de stockage (118) agencé pour stocker l'information personnelle reçue par le moyen de réception;
un moyen d'établissement de code ID (110) agencé pour établir un code ID correspondant à l'information personnelle stockée dans le deuxième moyen de stockage; et
un deuxième moyen de transmission (122) agencé pour transmettre le code ID établi par le moyen d'établissement de code ID au terminal de jeu;
et dans lequel
le dispositif externe est agencé pour:
transmettre au serveur de gestion d'informations des données se rapportant au dispositif externe incluant une demande pour fournir une information personnelle et un signal indiquant une condition pour l'information personnelle; et
recevoir et stocker dans un dispositif de stockage un code ID reçu depuis le serveur de gestion d'informations de sorte que ledit code ID soit inscrit au dispositif externe et l'information personnelle correspondant audit code ID devient disponible au dispositif externe, et
le serveur de gestion d'informations est agencé pour:
recevoir et enregistrer les données se rapportant au dispositif externe;
vérifier la condition de l'information personnelle demandée par rapport à la pluralité d'articles d'informations personnelles stockées dans le deuxième moyen de stockage;
extraire depuis le deuxième moyen de stockage une information personnelle qui répond à la demande;
transmettre au dispositif externe le code ID correspondant à l'information personnelle extraite; et;
déterminer si une nouvelle information personnelle a été reçue depuis le terminal et, si c'est le cas, transmettre le code ID correspondant à l'information personnelle au dispositif externe qui a fait la demande avec une condition qui est conforme à la nouvelle information personnelle,
et où
chacun des terminaux de jeu comprend en plus:
un moyen d'affichage d'images (202) agencé pour afficher une image;
un moyen de commande (230) agencé pour exécuter un programme de jeu;
un premier moyen de stockage agencé pour stocker une pluralité d'informations d'image d'entrée d'information personnelle adaptées pour inciter un joueur à entrer une information personnelle concernant le joueur, et une information de caractères concernant une image de caractère pour constituer l'image de jeu; et
un moyen de dessin (236) agencé pour être capable de constituer l'image de jeu en combinant de manière appropriée une pluralité de données contenant l'information d'image d'entrée d'information personnelle,
dans lequel le terminal de jeu est agencé pour inciter le joueur à entrer une information personnelle qui contient une pluralité d'articles à une pluralité de minutages comme des données pour constituer une image de jeu affichée sur le moyen d'affichage d'image, le jeu étant exécuté sur la base du programme de jeu.

2. Système d'entrée d'informations personnelles (1) selon la revendication 1,
dans lequel chacun des terminaux de jeu (20, 22, 24) comprend en plus un troisième de stockage (240) agencé pour stocker une pluralité d'informations complètes qui identifient si une entrée par le joueur a été terminée pour la pluralité d'articles contenus dans l'information personnelle,
le moyen de commande (230) est agencé pour amener le troisième moyen de stockage (240) à stocker les informations complètes pour les articles pour lesquels l'entrée par le joueur a été terminée, et à sortir une instruction, au moyen de dessin (236) pour combiner l'information d'image d'entrée d'information personnelle correspondant aux articles, parmi la pluralité d'articles, pour lesquels l'entrée par le joueur n'a pas été terminée avec l'information de caractère selon la pluralité d'informations complètes.

3. Système d'entrée d'informations personnelles (1) selon la revendication 1 ou 2, dans lequel le premier moyen de stockage (242) est agencé pour stocker une pluralité d'informations de caractères concernant une pluralité d'images de caractères, et pour stocker la pluralité d'informations d'image d'entrée d'information personnelle correspondant à la pluralité d'articles par rapport à chacune de la pluralité d'informations de caractères, et
le moyen de commande (230) est agencé pour sortir une instruction au moyen de dessin (236) afin d'amener le moyen de dessin à sélectionner l'information d'image d'entrée d'information personnelle devant être combinée avec l'image de caractère devant être incluse dans l'image de jeu parmi la pluralité d'informations d'image d'entrée d'information personnelle se rapportant à l'information de caractère sur les images de caractère.

4. Système d'entrée d'informations personnelles (1) selon l'une des revendications 1 à 3, dans lequel le moyen de dessin (236) est en plus agencé pour être capable de créer l'image du jeu sans utiliser l'information d'image d'entrée d'information personnelle, et
le moyen de commande (230) est agencé pour amener le moyen de dessin (236) à créer l'image du jeu sans utiliser l'information d'image d'entrée d'information personnelle en conformité avec le programme de jeu lorsqu'une information dont aucun avantage n'est souhaité devant être fournie à travers l'utilisation de l'information personnelle à un dispositif (30) auquel le deuxième moyen de transmission (122) peut transmettre le code ID est contenue dans l'un des articles de l'information personnelle.

5. Système d'entrée d'informations personnelles (1) selon l'une des revendications 1 à 4, dans lequel le premier moyen de transmission (248) est agencé pour transmettre l'information personnelle après que l'entrée soit terminée pour toute la pluralité d'articles.

6. Système d'entrée d'informations personnelles (1) selon l'une des revendications 1 à 5, dans lequel le deuxième moyen de stockage (118) est agencé pour stocker l'information personnelle uniquement lorsqu'une information de permission, qui indique qu'une permission pour fournir l'information personnelle à une tierce partie a été reçue du joueur, est reçue depuis le terminal de jeu (20, 22, 24).

7. Système d'entrée d'informations personnelles (1) selon l'une des revendications 1 à 6, dans lequel le deuxième moyen de stockage (118) est agencé pour stocker l'information personnelle uniquement au moment où le fait que l'information personnelle est soit une information correcte ou non est confirmé à travers le moyen d'affichage d'images (202) du terminal de jeu (20, 22, 24) et une information de confirmation indiquant que le joueur a fait la confirmation est reçue depuis le terminal de jeu.

8. Serveur de gestion d'informations (10) agencé pour être capable de communiquer avec une pluralité de terminaux de jeu (20, 22, 24), qui permettent à un joueur d'entrer une information personnelle contenant une pluralité d'articles, et un dispositif externe (30), comprenant:
un moyen de réception (122) agencé pour recevoir depuis un terminal de jeu une information personnelle contenant une pluralité d'articles;
un moyen de stockage (118) agencé pour stocker l'information personnelle reçue par le moyen de réception;
un moyen d'établissement de code ID (110) agencé pour établir un code ID correspondant à l'information personnelle stockée dans le moyen de stockage, et
un moyen de transmission (122) agencé pour transmettre le code ID établi par le moyen d'établissement de code ID au terminal de jeu,
dans lequel
le serveur de gestion d'informations est agencé pour:
recevoir et enregistrer des données se rapportant au dispositif externe incluant une demande pour fournir une information personnelle et un signal indiquant une condition pour l'information personnelle;
vérifier la condition de l'information personnelle demandée par rapport à la pluralité d'articles d'information personnelle stockée dans le moyen de stockage; et
extraire depuis le moyen de stockage une information personnelle qui répond à la demande;
transmettre au dispositif externe le code ID correspondant à l'information personnelle extraite; et;
déterminer si une nouvelle information personnelle a été reçue depuis le terminal et, si c'est le cas, transmettre le code ID correspondant à l'information personnelle au dispositif externe qui a fait la demande avec une condition qui est conforme à la nouvelle information personnelle,
dans lequel
le moyen de réception est agencé pour recevoir l'information personnelle contenant une pluralité d'articles depuis un terminal de jeu qui permet à un joueur d'entrer l'information personnelle contenant une pluralité d'articles en réponse à l'affichage d'une pluralité d'informations d'image d'entrée d'information personnelle pour demander à un joueur d'entrer la pluralité d'articles à une pluralité de minutages comme des données pour constituer une image de jeu exécutée selon un programme de jeu au terminal de jeu.

9. Serveur de gestion d'informations (10) selon la revendication 8, dans lequel le moyen de réception (122) est agencé pour recevoir l'information personnelle stockée dans le terminal de jeu (20, 22, 224) après que toute la pluralité d'articles soient entrés en réponse à la pluralité d'informations d'image d'entrée d'information personnelle.

10. Serveur de gestion d'informations (10) selon la revendication 8 ou 9, agencé en plus de telle sorte que le moyen de stockage (118) soit amené à stocker l'information personnelle uniquement lorsqu'une information de permission, qui indique qu'une permission pour fournir l'information personnelle stockée dans le terminal de jeu (20, 22, 24) à une tierce partie a été reçue du joueur, est reçue depuis le terminal de jeu.

11. Serveur de gestion d'informations (10) selon l'une des revendications 8 à 10, dans lequel le moyen de stockage (118) est agencé pour stocker l'information personnelle uniquement au moment où le fait que l'information personnelle stockée dans le terminal de jeu (20, 22, 24) est soit une information correcte ou non est confirmé à travers un affichage d'images (202) du terminal de jeu (20, 22, 20) et une information de confirmation indiquant que le joueur a fait la confirmation est reçue depuis le terminal de jeu.

12. Procédé d'obtention d'informations personnelles exécuté par un système d'entrée d'informations personnelles incluant une pluralité de terminaux de jeu (20, 22, 24), un serveur de gestion d'informations (10), un dispositif externe (13) et un dispositif de stockage relié au dispositif externe, où le serveur de gestion d'informations est agencé pour être capable de communiquer avec chacun de la pluralité de terminaux de jeu et le dispositif externe est agencé pour être capable de communiquer avec le serveur de gestion d'informations, le procédé comprenant les étapes consistant à:
transmettre l'information personnelle au serveur de gestion d'informations depuis le terminal de jeu;
recevoir l'information personnelle transmise depuis le terminal de jeu dans le serveur de gestion d'informations;
stocker l'information personnelle dans le serveur de gestion d'informations;
établir un code ID correspondant à l'information personnelle dans le serveur de gestion d'informations;
transmettre le code ID au terminal de jeu depuis le serveur de gestion d'informations;
transmettre depuis le dispositif externe au serveur de gestion d'informations des données se rapportant au dispositif externe incluant une demande pour fournir une information personnelle et un signal indiquant une condition pour l'information personnelle;
recevoir au dispositif externe, et stocker dans le dispositif de stockage, un code ID reçu depuis le serveur de gestion d'informations de telle sorte que ledit code ID soit inscrit au dispositif externe et l'information personnelle correspondant audit code ID devienne disponible pour le dispositif externe;
recevoir et enregistrer au serveur de gestion d'informations les données se rapportant au dispositif externe;
vérifier au serveur de gestion d'informations la condition de l'information personnelle demandée par le dispositif externe par rapport à une pluralité d'articles d'informations personnelles stockées dans un moyen de stockage du serveur de gestion d'informations;
extraire depuis le moyen de stockage une information personnelle qui répond à la demande reçue depuis le dispositif externe;
transmettre depuis le serveur de gestion d'informations au dispositif externe le code ID correspondant à l'information personnelle extraite; et
déterminer si une nouvelle information personnelle a été reçue depuis le terminal et, si c'est le cas, transmettre le code ID correspondant à l'information personnelle au dispositif externe qui a fait la demande avec une condition qui est conforme à la nouvelle information personnelle,
et comprenant en plus les étapes consistant à:
afficher une image de jeu dans le terminal de jeu;
stocker une pluralité d'informations d'image d'information personnelle entrée pour amener un joueur à entrer une information personnelle à propos du joueur contenant une pluralité d'articles à une pluralité de minutages comme des données pour constituer l'image de jeu, le jeu étant exécuté sur la base d'un programme de jeu, et d'une information de caractère concernant une image de caractère pour constituer l'image de jeu dans le terminal de jeu; et
constituer l'image de jeu en combinant une pluralité de données contenant l'information d'image d'entrée d'information personnelle et l'information de caractère dans le terminal de jeu.
